# EUROPEAN PATENT SPECIFICATION

(11) **EP 3 374 144 B1**
(45) Date of publication and mention of the grant of the patent: **16.04.2025**
(21) Application number: 16864695.8
(22) Date of filing: 10.05.2016
(51) Int. Cl.: B32B 5/02, B32B 5/18, B32B 5/24, B32B 5/32, B32B 19/04, B32B 27/06, B32B 3/26, B29C 70/50, B29C 70/02

(54) **METHOD OF MAKING ACOUSTIC PREPREGS**
VERFAHREN ZUR HERSTELLUNG VON AKUSTISCHEN PREPREGS
PROCÉDÉ POUR LA FABRICATION DES PRÉIMPRÉGNÉS INSONORISANTS

(30) Priority: 11.11.2015 US 201562253843 P
(43) Date of publication of application: 19.09.2018
(73) Proprietor: Hanwha Azdel, Inc., Forest, VA 24551 (US)
(72) Inventor: WANG, Ruomiao, Forest, VA 24551 (US)
(74) Representative: Marks & Clerk LLP
(86) International application number: PCT/US2016/031585
(87) International publication number: WO 2017/082958

(56) References cited:
- WO-A1-2010/109158
- GB-A- 2 273 100
- US-A- 4 643 940
- US-A- 5 389 716
- US-A1- 2005 082 721
- US-A1- 2005 281 999
- US-A1- 2006 148 916
- US-A1- 2009 292 032
- US-A1- 2009 305 595
- US-A1- 2013 244 528
- US-A1- 2014 031 479
- US-A1- 2014 134 904
- US-B2- 7 878 301

## Description

### TECHNOLOGICAL FIELD

This application is related to acoustic composite articles that comprise one or more expandable graphite materials. In certain configurations, composite articles that include as-produced core layers and that provide a desired acoustic absorption coefficient and/or that meet ASTM E84, class A requirements are described.

### BACKGROUND

Articles for automotive and construction materials applications typically are designed to meet a number of competing and stringent performance specifications. US 2009/305595 is directed to a nonwoven fibrous sheet that is impregnated with a polymer. The impregnated sheet is then sprayed with a polyammonium phosphate solution to provide a sheet with a specific ventilation resistance in the range of between 0.08 and 3.00 kPa·s/m.

### SUMMARY

Certain configurations of the prepregs, cores and composite articles described herein provide desirable attributes including, but not limited to, high acoustic absorption at low thickness, the ability to use the articles without molding of the core layer, the ability of the article to meet ASTM E84, class A requirements and other desirable features. The present invention provides a method of producing a thermoplastic composite article, in accordance with claim 1. Further features of the invention are described in the dependent claims.

Also described herein is a method of producing a thermoplastic composite article comprising a porous core layer comprising a plurality of reinforcing fibers, a thermoplastic material and expandable graphite material, where the method comprises heating the reinforcing fibers, the thermoplastic material and the expandable graphite material to a first temperature above a melting point of the thermoplastic material without any substantial lofting of the expandable graphite material to form a web comprising the thermoplastic material, the expandable graphite material and the reinforcing fibers, the thermoplastic composite article providing a sound absorption coefficient in an as-produced state of at least 0.2 at 2400 Hz as tested by ASTM E1050 dated 2010 when the core layer is no more than 4 mm thick.

In certain examples, the described method comprises using the thermoplastic composite article as a building panel without molding the thermoplastic composite article. In some examples, the method comprises configuring a thickness of the thermoplastic composite article to be no thicker than 3.5 mm while providing the sound absorption coefficient of at least 0.2 at 2400 Hz as tested by ASTM E1050 dated 2010. In some instances, the method comprises configuring a thickness of the thermoplastic composite article to be no thicker than 2 mm while providing the sound absorption coefficient of at least 0.2 at 2400 Hz as tested by ASTM E1050 dated 2010. In other examples, the method comprises compressing the core layer of the thermoplastic article, prior to forming the core layer, to a thickness of less than 4 mm. In certain embodiments, the method comprises compressing the core layer of the thermoplastic article, prior to forming the core layer, to a thickness of less than 2 mm. In certain instances, the method comprises configuring the thermoplastic composite article with a scrim on one surface of the thermoplastic composite article. In other examples, the method comprises configuring the thermoplastic composite article with an additional scrim on an opposite surface of the thermoplastic composite article, in which at least one of the scrim and the additional scrim comprises an open cell structure. In some instances, the method comprises configuring the porous core layer with about 30-60 weight percent glass fibers as the reinforcing fibers and about 5-15 weight percent expandable graphite material with the balance of the porous core layer comprising the thermoplastic material. In other examples, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

Also described herein is a method which comprises combining a thermoplastic material, reinforcing fibers and expandable graphite material in a mixture to form an agitated aqueous foam, disposing the agitated aqueous foam onto a wire support, evacuating the water to form a web, heating the web to a first temperature at or above the melting temperature of the thermoplastic material, in which the first temperature is selected so substantially no lofting of the expandable graphite material occurs, compressing the web to a thickness of no more than 4 mm to provide a thermoplastic composite article, and using the provided thermoplastic composite article without any molding of the thermoplastic composite article, in which the thermoplastic composite article provides a sound absorption coefficient of at least 0.2 at 2400 Hz as tested by ASTM E1050 dated 2010 when the compressed web comprises a thickness of no more than 4 mm.

In certain examples, the compressing step comprises passing the heated web through a set of rollers to provide the thickness of no more than 4 mm. In other examples, the method comprises mixing the agitated aqueous foam until the expandable graphite material is homogeneously dispersed in the agitated aqueous foam. In some instances, the method comprises applying a scrim to at least one surface of the thermoplastic composite article prior to compressing the article. In other instances, the method comprises applying a scrim to at least one surface of the thermoplastic composite article after compressing the article. In some instances, the method comprises compressing the article to a thickness of no more than 2 mm to provide a thermoplastic composite article providing a sound absorption coefficient of at least 0.2 at 2400 Hz as tested by ASTM E1050 dated 2010 when the article is compressed to no more than 2 mm. In certain examples, the method comprises coupling the thermoplastic article to a second thermoplastic article comprising substantially the same composition and thickness as the thermoplastic article. In some examples, the method comprises coupling the thermoplastic article to a second thermoplastic article comprising substantially the same composition and a different thickness as the thermoplastic article. In certain instances, the thermoplastic article comprising the different thickness is no more than 4 mm thick. In some examples, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

In an additional disclosure, a composite article comprises a thermoplastic fiber-reinforced porous core layer and a skin disposed on at least one surface of the porous core layer, the porous core layer comprising a web formed from a plurality of reinforcing fibers, an expandable graphite material and a thermoplastic material, the composite article providing a sound absorption coefficient of at least 0.2 at 2400 Hz as tested by ASTM E1050 dated 2010 when the web is not thicker than 4 mm.

In some instances, the thermoplastic material comprises a polyolefin and the reinforcing fibers comprise glass fibers. In other instances, the glass fibers are present from about 30 to 60 weight percent, the expandable graphite material is present from about 5 to 15 weight percent with the balance of the core layer comprising the thermoplastic material. In some examples, the skin layer is selected from the group consisting of a scrim and an open-celled film. In certain examples, the article comprises an adhesive layer between the core layer and the skin layer. In other examples, the article comprises a second skin layer disposed on an opposite surface of the core layer. In some examples, the skin layer comprises an open structure to permit sound waves to enter the core layer and the second skin layer comprises a closed structure to block sound waves from exiting the composite article. In some examples, the article comprises a first adhesive layer between the core layer and the skin layer and a second adhesive layer between the core layer and the second skin layer. In other examples, the article comprises a decorative layer disposed on the skin layer. In some examples, the expandable graphite material comprises a carbon content of at least 85% by weight of the expandable graphite material, a moisture content of less than 1% by weight of the expandable graphite material, a sulfur content of less than 4% by weight of the expandable graphite material, and an expansion ratio less than or equal to 270:1 g/cc of the expandable graphite material and optionally a useful pH range of 5-10.

In another disclosure, non-molded composite article comprises a thermoplastic fiber-reinforced porous core layer and a skin disposed on at least one surface of the porous core layer, the porous core layer comprising a compressed web formed from a plurality of reinforcing fibers held together by a thermoplastic material, in which the web comprises a plurality of voids comprising an expandable graphite material, the composite article providing a sound absorption coefficient of at least 0.2 at 2400 Hz as tested by ASTM E1050 dated 2010 when a thickness of the web is no more than 4 mm, in which the expandable graphite material is selected to provide a higher sound absorption coefficient for the non-molded composite article when the core layer is present in an as-produced state compared to a core layer that has been subjected to a molding process.

In certain configurations, the method comprises using the thermoplastic composite article as a building panel without molding the article. In other configurations, the method comprises using the thermoplastic composite article as an automotive panel without molding of the article. In some instances, the method comprises using the thermoplastic composite article as a recreational vehicle panel without molding the article. In some examples, the amount of expandable graphite material in the web is selected so the article meets ASTM E84, class A requirements without molding the article. In other examples, the method comprises disposing a decorative layer on the skin layer. In some instances, the method comprises coupling the compressed web to a second compressed web having substantially the same composition as the compressed web prior to disposing skin layer on the compressed web. In some examples, the method comprises compressing the web to a second thickness less than the first thickness, in which compression of the web to the second thickness provides an increase in the sound absorption coefficient compared to the sound coefficient of the web at the first thickness. In other examples, the method comprises configuring the second thickness to be at least 50% less than the first thickness. In certain instances, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

In an additional disclosure, a method of producing a thermoplastic composite article comprises combining a thermoplastic material, reinforcing fibers and non-lofted expandable graphite material in a mixture to form an agitated aqueous foam, disposing the agitated aqueous foam onto a wire support, evacuating the water to form a web, heating the web to a first temperature at or above the melting temperature of the thermoplastic material, in which the first temperature is selected so substantially no loft of the non-lofted expandable graphite material occurs, compressing the web to a first thickness, and disposing a skin on the compressed web to provide the thermoplastic composite article, in which the web of thermoplastic composite article comprises an effective amount of the non-lofted expandable graphite material to provide a sound absorption coefficient for the thermoplastic article of at least 0.2 at 2400 Hz as tested by ASTM E1050 dated 2010 when the web is no more than 4 mm thick.

In certain configurations, the method comprises using the thermoplastic composite article as a building panel without molding the article. In other instances, the method comprises using the thermoplastic composite article as an automotive panel without molding of the article. In other examples, the method comprises using the thermoplastic composite article as a recreational vehicle panel without molding the article. In some instances, the amount of expandable graphite material in the web is selected so the article meets ASTM E84, class A requirements without molding the article. In other instances, the method comprises disposing a decorative layer on the skin layer. In some examples, the method comprises coupling the compressed web to a second compressed web having substantially the same composition as the compressed web prior to disposing skin layer on the compressed web. In other configurations, the method comprises compressing the web to a second thickness less than the first thickness, in which compression of the web to the second thickness provides an increase in the sound absorption coefficient compared to the sound coefficient of the web at the first thickness. In some instances, the method comprises configuring the second thickness to be at least 50% less than the first thickness. In other instances, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

In another disclosure, a method of producing a thermoplastic composite article comprises a porous core layer comprising a plurality of reinforcing fibers, a thermoplastic material and expandable graphite material and where the method comprises heating the reinforcing fibers, the thermoplastic material and the expandable graphite material to a first temperature above a melting point of the thermoplastic material without any substantial lofting of the expandable graphite material to form a web comprising the thermoplastic material, the expandable graphite material and the reinforcing fibers, the thermoplastic composite article comprising an effective amount of the expandable graphite material to meet class A requirements as tested by ASTM E84 dated 2009 is provided.

In certain examples, the method comprises using the thermoplastic composite article as a building panel without molding the thermoplastic composite article. In other examples, the method comprises configuring the thermoplastic composite article without any additional flame retardant agent. In some instances, the method comprises configuring a thickness of the thermoplastic composite article to be no thicker than 4 mm. In further examples, the method comprises compressing the core layer of the thermoplastic article, prior to curing of the core layer, to a thickness of less than 4 mm. In some examples, the method comprises compressing the core layer of the thermoplastic article, prior to curing the core layer, to a thickness of less than 2 mm. In additional examples, the method comprises configuring the thermoplastic composite article with a scrim on one surface of the thermoplastic composite article. In certain instances, the method comprises configuring the thermoplastic composite article with an additional scrim on an opposite surface of the thermoplastic composite article, in which at least one of the scrim and the additional scrim comprises an open cell structure. In other examples, the method comprises configuring the porous core layer with about 35-55 weight percent glass fibers as the reinforcing fibers and at least 10 weight percent expandable graphite material with the balance of the porous core layer comprising the thermoplastic material. In some examples, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

In another disclosure, a method comprises combining a thermoplastic material, reinforcing fibers and expandable graphite material in a mixture to form an agitated aqueous foam, disposing the agitated aqueous foam onto a wire support, evacuating the water to form a web, heating the web to a first temperature at or above the melting temperature of the thermoplastic material, in which the first temperature is selected so substantially no lofting of the expandable graphite material occurs, compressing the web to a thickness of no more than 4 mm to provide a thermoplastic composite article, and using the provided thermoplastic composite article without any molding of the thermoplastic composite article, in which the thermoplastic composite article comprises an effective amount of the expandable graphite material to meet Class A requirements as tested by ASTM E84 dated 2009.

In certain configurations, the compressing step comprises passing the heated web through a set of rollers to provide the thickness of no more than 4 mm. In other configurations, the method comprises mixing the agitated aqueous foam until the expandable graphite material is homogeneously dispersed in the agitated aqueous foam. In some examples, the method comprises applying a scrim to at least one surface of the thermoplastic composite article prior to compressing the article. In other examples, the method comprises applying a scrim to at least one surface of the thermoplastic composite article after compressing the article. In certain examples, the method comprises compressing the article to a thickness of no more than 2 mm. In other examples, the method comprises configuring the web without any added flame retardant agent. In some examples, the method comprises coupling the thermoplastic article to a second thermoplastic article comprising substantially the same composition and a different thickness as the thermoplastic article. In certain instances, the thermoplastic article comprising the different thickness is no more than 4 mm thick. In other configurations, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

In an additional disclosure, a composite article comprises a thermoplastic fiber-reinforced porous core layer and a skin disposed on at least one surface of the porous core layer, the porous core layer comprising a web formed from a plurality of reinforcing fibers, an expandable graphite material and a thermoplastic material, the composite article comprising an effective amount of expandable graphite material to meet Class A requirements as tested by ASTM E84 dated 2009.

In some configurations, the thermoplastic material comprises a polyolefin and the reinforcing fibers comprise glass fibers. In other configurations, the glass fibers are present from about 30 to 60 weight percent, the expandable graphite material is present at least at 10 percent by weight with the balance of the core layer comprising the thermoplastic material. In certain examples, the skin layer is selected from the group consisting of a scrim and an open-celled film. In other examples, the article comprises an adhesive layer between the core layer and the skin layer. In some examples, the article comprises a second skin layer disposed on an opposite surface of the core layer. In certain instances, the core layer does not comprise any added flame retardant agent. In other instances, the article comprises a first adhesive layer between the core layer and the skin layer and a second adhesive layer between the core layer and the second skin layer. In some examples, the article comprises a decorative layer disposed on the skin layer. In further instances, the expandable graphite material comprises a carbon content of at least 85% by weight of the expandable graphite material, a moisture content of less than 1% by weight of the expandable graphite material, a sulfur content of less than 4% by weight of the expandable graphite material, and an expansion ratio less than or equal to 270:1 g/cc of the expandable graphite material and optionally a useful pH range of 5-10.

In another disclosure, a non-molded composite article comprises a thermoplastic fiber-reinforced porous core layer and a skin disposed on at least one surface of the porous core layer, the porous core layer comprising a compressed web formed from a plurality of reinforcing fibers held together by a thermoplastic material, in which the web comprises a plurality of voids comprising an expandable graphite material, the composite article comprising an effective amount of expandable graphite material to meet Class A requirements as tested by ASTM E84 dated 2009 without molding of the composite article.

In certain examples, the core layer does not comprise any added flame retardant materials. In other examples, the composite article has a thickness of less than 4 mm. In some examples, the composite article has a thickness of less than 2 mm. In some examples, the expandable graphite material is present in a substantially non-lofted form in voids of the web. In other examples, the article comprises a lofting agent. In certain instances, the skin is configured as an open cell scrim. In some examples, the article comprises an additional skin disposed on an opposite surface of the core layer. In some examples, the additional skin is configured as a closed cell scrim. In other instances, the expandable graphite material comprises a carbon content of at least 85% by weight of the expandable graphite material, a moisture content of less than 1% by weight of the expandable graphite material, a sulfur content of less than 4% by weight of the expandable graphite material, and an expansion ratio less than or equal to 270:1 g/cc of the expandable graphite material and optionally a useful pH range of 5-10.

In an additional disclosure, a method of producing a thermoplastic composite article comprises combining a thermoplastic material, reinforcing fibers and non-lofted expandable graphite material in a mixture to form an agitated aqueous foam, disposing the agitated aqueous foam onto a wire support, evacuating the water to form a web, heating the web to a first temperature at or above the melting temperature of the thermoplastic material, in which the first temperature is selected so substantially no loft of the non-lofted expandable graphite material occurs, compressing the web to a first thickness, and disposing a skin on the compressed web to provide the thermoplastic composite article, in which the web of thermoplastic composite article comprises an effective amount of the non-lofted expandable graphite material to meet Class A requirements as tested by ASTM E84 dated 2009.

In some configurations, the method comprises using the thermoplastic composite article as a building panel without molding the article. In other configurations, the method comprises using the thermoplastic composite article as an automotive panel without molding of the article. In some examples, the method comprises using the thermoplastic composite article as a recreational vehicle panel without molding the article. In other instances, the amount of expandable graphite material in the web is selected so the article also comprises a sound absorption coefficient of at least 0.5 at a frequency of 4500 Hz as tested by ASTM E1050 dated 2010 when the web is no thicker than 3.5 mm and without molding of the web. In some examples, the method comprises disposing a decorative layer on the skin layer. In other instances, the method comprises coupling the compressed web to a second compressed web having substantially the same composition as the compressed web prior to disposing skin layer on the compressed web. In certain examples, the method comprises compressing the web to a second thickness less than the first thickness, in which compression of the web to the second thickness provides an increase in the sound absorption coefficient compared to the sound coefficient of the web at the first thickness. In other examples, the method comprises configuring the second thickness to be at least 50% less than the first thickness. In certain examples, the method comprises selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, and to comprise an expansion ratio less than or equal to 270:1 g/cc of the expandable graphite material and optionally a useful pH range of 5-10.

In another disclosure, a composite article comprises a thermoplastic fiber-reinforced porous core layer and a skin disposed on at least one surface of the porous core layer, the porous core layer comprising a web formed from a plurality of reinforcing fibers, an expandable graphite material and a thermoplastic material, the composite article may provide one or more of the following sound absorption coefficients: at least 0.22 at 1200 Hz, at least 0.23 at 2400 Hz, at least 0.325 at 3000 Hz, at least 0.35 at 3200 Hz, at least 0.39 at 3400 Hz, at least 0.42 at 3600 Hz, at least 0.44 at 3800 Hz, at least 0.46 at 4000 Hz, at least 0.48 at 4200 Hz, at least 0.49 at 4400 Hz, and at least 0.51 at 4500 Hz as tested by ASTM E1050 dated 2010 at a core layer thickness of 3.5 mm or less when the composite article is in an as-produced state without being molded. In certain instances, the article comprises a first skin disposed on a first surface of the porous core layer. In other instances, the article comprises a second skin disposed on a second surface of the core layer, in which the second surface is opposite the first surface.

In other disclosures, the composite articles described herein may be used in or present in many different types of devices and systems including, for example, in vehicles, wall assemblies, office cubicles, etc. For example, a vehicle comprising a frame and a body, in which one or both of the frame or body are coupled to a composite article as described herein can be provided. In other instances, a wall assembly comprising a support structure and a composite article as described herein may be provided. In other instances, an office cubicle comprising at least two walls, wherein at least one of the walls comprises a composite article as described herein may be provided.

Additional features, aspect, examples, configurations and examples are described in more detail below.

### BRIEF DESCRIPTION OF THE FIGURES

Certain examples are described with reference to the accompanying figures in which:
FIG. 1 is an illustration of a prepreg comprising expandable graphite material, in accordance with certain examples;
FIG. 2A is an illustration of two prepregs comprising different loadings of expandable graphite material, in accordance with certain examples;
FIG. 2B is an illustration showing the two prepregs of FIG. 2A after melting together, in accordance with certain configurations;
FIG. 2C is an illustration showing a prepreg comprising expandable graphite material coupled to a skin comprising expandable graphite material, in accordance with certain examples;
FIG. 3 is an illustration showing a prepreg or core comprising expandable graphite material coupled to a skin, in accordance with certain examples;
FIG. 4 is an illustration showing a prepreg or core comprising expandable graphite material coupled to two skins, in accordance with certain examples;
FIG. 5 is another illustration showing a prepreg or core comprising expandable graphite material coupled to two skins, in accordance with certain examples;
FIG. 6 is another illustration showing two prepregs or cores comprising expandable graphite material coupled to each other through a skin layer, in accordance with certain examples;
FIG. 7 is an illustration showing two prepregs or cores comprising expandable graphite material coupled to each other with a skin layer disposed on one of the core layers, in accordance with certain examples;
FIG. 8 is an illustration showing two prepregs or cores comprising expandable graphite material coupled to each other with a skin layer disposed on each of the core layers, in accordance with certain examples;
FIG. 9 is an illustration showing two prepregs or cores comprising expandable graphite material coupled to each other through a skin layer and comprising another skin layer disposed on one of the skin layers, in accordance with certain examples;
FIG. 10 is an illustration showing material strips disposed on a core layer, in accordance with certain examples;
FIGS. 11A-11C show sound absorption coefficient measurements for different molding thicknesses, in accordance with certain examples;
FIG. 12 show sound absorption coefficient measurements for as-produced articles, in accordance with certain examples; and
FIG. 13 compares sound absorption coefficients for an as-produced article and after molding the article to various thicknesses.

It will be recognized by the person of ordinary skill in the art, given the benefit of this disclosure, that certain dimensions or features in the figures may have been enlarged, distorted or shown in an otherwise unconventional or non-proportional manner to provide a more user friendly version of the figures. No particular thickness, width or length is intended by the depictions in the figures, and relative sizes of the figure components are not intended to limit the sizes of any of the components in the figures. Where dimensions or values are specified in the description below, the dimensions or values are provided for illustrative purposes only. In addition, no particular material or arrangement is intended to be required by virtue of shading of certain portions of the figures, and even though different components in the figures may include shading for purposes of distinction, the different components can include the same or similar materials, if desired. In some instances, core layers that comprise expandable graphite materials are shown as including stubble or dots for illustration purposes. The arrangement of the stubbles and dots is not intended to imply any particular distribution unless otherwise specified in the context of describing that particular figure.

### DETAILED DESCRIPTION

Certain examples are described below with reference to singular and plural terms in order to provide a more user friendly description of the technology disclosed herein. These terms are used for convenience purposes only and are not intended to limit the prepregs, cores, articles, composites and other subject matter as including or excluding certain features unless otherwise noted as being present in, or excluded from, a particular example described herein.

In certain instances, thermoplastic composite articles are often molded or processed into various shapes to provide a final formed part or article. During processing, the overall thickness of one or more components or layers of the article to be processed may increase. In some configurations described herein, the presence of expandable graphite materials in a thermoplastic prepreg or a thermoplastic core permits the core to absorb sound waves of a desired frequency without the need to increase the overall thickness of the core layer. For example, the acoustic absorption of the article may be suitable without the need to increase the overall thickness of the core layer. In prior articles that include lofting agents, molding the articles increases the core layer thickness and generally increases the acoustic absorption with thicker core layers, e.g., above 6-8 mm or more. In contrast, the articles described herein may include thin core layers, e.g., 4 mm or less, 3.5 mm or less, 3 mm or less or 2 mm or less, while still providing desired sound absorption characteristics. The ability to use an article without the need to increase the thickness of the core layer can facilitate faster use of the articles and can reduce the overall volume occupied by the article, e.g., thinner walls or panels may be used to provide increased space for the final product. For example, articles can be used as-produced without further processing of the core layer to provide desired acoustic benefits. As used herein, the phrase "as-produced" refers to the article being used without any molding steps that would alter the thickness of the prepreg or core layer compared to its thickness in the as-produced state.

In certain configurations, the articles described herein can comprise a prepreg or core layer. While not wishing to be bound by any particular theory, a prepreg is generally not a fully formed or processed version of a core. For example, a partially cured layer comprising a thermoplastic material, a plurality of fibers and expandable graphite materials is generally referred to as a prepreg, whereas a fully cured layer comprising thermoplastic material, a plurality of fibers and expandable graphite materials is generally referred to as a core or core layer. As noted herein, even though the core may be considered cured, the core can still be coupled to one or more skin layers to alter the overall properties of a composite article comprising the core layer. The description below makes reference to both a prepreg and a core and the materials (and their amounts and properties) used in connection with a prepreg can also be used in a core if desired.

In certain configurations described herein, expandable graphite (EG) materials are included in the prepregs core and articles to enhance sound absorption of the articles. While not wishing to be bound by any particular theory, the presence of EG materials can act to disperse and/or absorb sound energy and reduce the overall level of sound which is passed through the article. For example, many automotive applications are concerned with reducing NVH (noise, vibration and harshness). By including EG materials in a core layer, the noise transmitted into a user cabin can be reduced compared to a comparable core layer lacking the EG materials. While EG materials can be lofted to increase the thickness of the core layer, as described in commonly owned U.S. Application No. 62/079,288 filed on November 13, 2014, by selecting suitable types of EG materials and their loading amounts, the core layer can remain in a non-lofted form and provide desired acoustic absorption properties. In some examples, the type of heat and the temperature used to produce the prepregs or core layers can be selected such that minimal or no substantial lofting of the core layer occurs. In other instances, some lofting of the prepreg or core layer may occur during production, but post-produced core layers can be compressed to a desired thickness, e.g., 4 mm or less or 2 mm or less or 1 mm or less, to reduce the overall thickness of the core layer.

In some instances, the prepregs, cores and articles described herein are porous or permeable materials that comprise open cell structures, e.g., voids. The presence of such open cell structures renders it more difficult for the prepregs, cores and articles to absorb sound as sound waves readily pass through air or open space in the core. By including an EG material in combination with a thermoplastic material and fibers, the prepregs, cores and article can have enhanced sound absorption. For example, an article comprising a porous core layer comprising a plurality of reinforcing fibers, a thermoplastic material, and an effective amount of expandable graphite particles can provide an sound absorption coefficient for an as-produced article of at least 0.2 at 2400 Hz (or 0.2 at 2860 Hz) as tested by ASTM E1050 dated 2010 and entitled "Standard Test Method for Impedance and Absorption of Acoustical Materials Using A Tube, Two Microphones and A Digital Frequency Analysis System" where the core layer of the article is less than 4 mm. If desired, the EG material can be homogeneously dispersed in void space of the porous core layer or may be present in a differential distribution with more EG material being present in one or more areas or closer to one or more surfaces of the core layer. As noted below, skins or other materials may also be disposed on the porous core layer if desired and can be selected to further enhance sound absorption. In some instances, the article may provide a sound absorption coefficient of at least 0.22 at 1200 Hz as tested by ASTM E1050 dated 2010 at a thickness of 3.5 mm or less in as as-produced article. In other configurations, the article may provide a sound absorption coefficient of at least 0.23 at 2400 Hz as tested by ASTM E1050 dated 2010 at a thickness of 3.5 mm or less in as as-produced article. In additional configurations. In certain examples, the article may provide a sound absorption coefficient of at least 0.325 at 3000 Hz as tested by ASTM E1050 dated 2010 at a thickness of 3.5 mm or less. In other examples, the article may provide a sound absorption coefficient of at least 0.35 at 3200 Hz as tested by ASTM E1050 dated 2010 at a thickness of 3.5 mm or less. In additional configurations, the article may provide a sound absorption coefficient of at least 0.39 at 3400 Hz as tested by ASTM E1050 dated 2010 at a thickness of 3.5 mm or less. In other examples, the article may provide a sound absorption coefficient of at least 0.42 at 3600 Hz as tested by ASTM E1050 dated 2010 at a thickness of 3.5 mm or less. In certain examples, the article may provide a sound absorption coefficient of at least 0.44 at 3800 Hz as tested by ASTM E1050 dated 2010 at a thickness of 3.5 mm or less. In some examples, the article may provide a sound absorption coefficient of at least 0.46 at 4000 Hz as tested by ASTM E1050 dated 2010 at a thickness of 3.5 mm or less. In other examples, the article may provide a sound absorption coefficient of at least 0.48 at 4200 Hz as tested by ASTM E1050 dated 2010 at a thickness of 3.5 mm or less. In additional examples, the article may provide a sound absorption coefficient of at least 0.49 at 4400 Hz as tested by ASTM E1050 dated 2010 at a thickness of 3.5 mm or less. In further examples, the article may provide a sound absorption coefficient of at least 0.51 at 4500 Hz as tested by ASTM E1050 dated 2010 at a thickness of 3.5 mm or less. The 3.5 mm thickness in the above sound absorption coefficient values refers to the thickness of the core layer, and the overall article generally will have a higher thickness as one or more skins may be present on a surface of the article.

In other configurations, the EG material may be selected so that it meets ASTM E84 requirements (ASTM E84 dated 2009 entitled "Standard Test Method for Surface Burning Characteristics of Building Materials"). For example, the particular EG material selected for use in the core layer may provide an article that meets the ASTM E84 class A or class B requirements in an as-produced article, e.g., without any molding, or in a molded article if desired. Class A articles differ from class B articles in that class A articles have a flame spread index of about 0-25 whereas class b articles have a flame spread index of about 26-75. In some instances, the EG material and the amount of EG material in the core layer can be selected such that the final produced article meets the ASTM E84 class a requirements and provide a desired acoustic absorption coefficient as tested by ASTM E1050. Articles that meet one or more of the E84, class A requirements and provides a desired sound absorption coefficient can be used in many different applications including, for example, as recreational vehicle panels, office cubicle walls, building panels that can replace drywall or similar materials, roofing panels, structural panels, flooring, in automotive applications, e.g., interior panels, underbody shields, engine covers, etc., in aerospace application as interior aircraft panels, aircraft floor panels or as other building, automotive or aerospace applications.

In certain examples, the particular EG material selected for use in the prepregs, core and articles may be substantially insensitive to lofting at process temperatures and conditions used to produce the prepregs and cores. For example, lofting of the EG material can act in certain instances to reduce the sound absorption coefficient of the article. By selecting an EG material that can be mixed with the other prepreg materials while at the same time remaining in a substantially non-lofted form, an article can be produced with a high sound absorption coefficient while keeping the overall thickness of the prepreg or core small, e.g., 3.5 mm or less, and in a non-molded state. In some instances, an EG material with an average particle size greater than about 300 microns can be used. In other instances, the EG material may comprise at least 80 weight percent carbon or at least 85 weight percent carbon. The moisture content of the EG material may be less than 1% by weight. In some instances, the amount of sulfur present in the selected EG material can be less than 4% by weight, e.g., between 3-4% by weight. The expansion ratio of the selected EG material may be less than 300:1 g/cc, e.g., less than 290:1 g/cc or less than 270:1 g/cc. In some instances, the useful pH range of the EG material can be about 1-10 or 1-6 or 5-10. In certain configurations, the percent expansion of the EG material in as as-produced prepreg or core, e.g., one where the prepreg or core is not subjected to any molding conditions, may be less than 10%, less than 5% or even less than 3%.

In certain configurations, a porous prepreg comprising one or more thermoplastic materials and a plurality of fibers that together have an open cell structure, e.g., void space, can be produced. In some configurations, expandable graphite materials can be loaded into the void space in a manner where the expandable graphite materials reside within the void space formed by crossing over of the fibers, which can be held in place by the thermoplastic material. In some instances, the thermoplastic materials and/or the fibers can be selected so that they are generally inert or non-reactive with the expandable graphite materials. Even though the expandable graphite material may not covalently bond to the thermoplastic material and/or the fibers, there typically can be covalent bonding present in or within the expandable graphite material itself. In other instances, it may be desirable to covalently bond the expandable graphite materials to the thermoplastic materials, the fibers or both to provide some covalently bonded expandable graphite materials in the prepreg. Even where bonded expandable graphite materials are present, the expandable graphite materials desirably can receive and absorb sound waves under suitable conditions. In some instances, both covalently bonded expandable graphite materials and non-covalently bonded expandable graphite materials may also be present in the prepreg. While some configurations of the prepregs may comprise expandable graphite materials where about 100% of the expandable graphite materials are non-covalently bonded, weak interactions such as van der Waals' interactions or electrostatic interactions can take place between the expandable graphite materials and the other components of the prepreg or core.

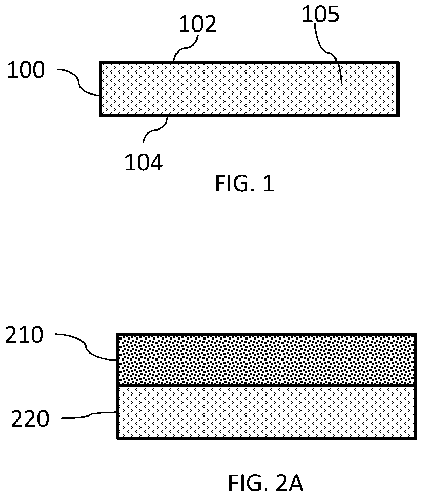

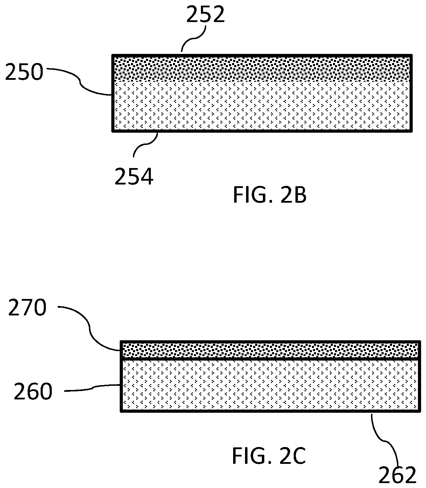

In certain examples and referring to FIG. 1, a prepreg 100 is shown that comprises a thermoplastic material and a plurality of fibers. The prepreg 100 also comprises expandable graphite materials (shown for illustration purposes as dots 105) dispersed through the prepreg 100. In some instances, the expandable graphite material dispersion can be substantially homogeneous or substantially uniform from a first surface 102 to a second surface 104 of the prepreg 100. As described in more detail herein, to achieve such substantially homogeneous or substantially uniform distribution of expandable graphite materials in the prepreg 100, the components of the prepreg 100 can be mixed together to form a dispersion. Mixing can be performed until the dispersion comprises a substantially homogeneous or substantially uniform mixture of the expandable graphite materials, the thermoplastic materials and the fibers in the dispersion. The prepreg 100 may then be formed as described herein, e.g., by disposing the dispersion on a wire screen using a suitable laying process. In other configurations, it may be desirable to provide a gradient distribution of expandable graphite materials from the surface 102 to the surface 104 such that more expandable graphite materials are present towards one of the surfaces 102, 104 than the other surface. In some examples, a substantially uniform distribution of expandable graphite materials is present in a prepreg 100 and then additional expandable graphite materials are added to one side of the prepreg 100 to provide a gradient distribution. Such additional expandable graphite materials can be added directly to the prepreg 100, e.g., by spraying or coating a solution comprising the expandable graphite material, or can be added by coupling a skin, additional prepreg or other component comprising expandable graphite materials to the prepreg 100. For example and referring to FIG. 2A, a first prepreg 210 and a second prepreg 220 disposed on the first prepreg 210 is shown. Each of the first prepreg 210 and the second prepreg 220 comprises a substantially uniform distribution of expandable graphite materials, but the amount of expandable graphite materials in the prepregs 210, 220 is different. If desired, however, only one of the prepregs 210, 220 may comprise expandable graphite material and the other prepreg may not comprise any EG material or may comprise a material other than expandable graphite material, e.g., microspheres. The other material, e.g., microspheres, may be present in combination with the expandable graphite material or may be present in one of the prepregs 210, 220 without any expandable graphite material. The thermoplastic materials of the prepregs 210, 220 can be melted and/or compressed to provide a single prepreg 250 (FIG. 2B). The result of melting of the prepregs 210, 220 together is a gradient distribution of expandable graphite materials in the prepreg 250 with increased amounts of expandable graphite materials adjacent to a surface 252 as compared to the amount present adjacent to a surface 254. The exact overall thickness of the prepreg 250 may vary depending on the conditions used and no particular thickness is intended to be implied in FIG. 2B. In some instances, the surface where sound waves are incident may comprise a higher amount of EG material to provide for increased sound absorption at that surface. While not shown, a third prepreg similar to the prepreg 210 could be coupled to an opposite surface of the prepreg 220 to provide a 3-layer prepreg, which can be melted to provide EG material at higher amounts adjacent to each of the surfaces of the composite prepreg. This configuration can permit higher sound absorption at each surface of the prepreg. While not wishing to be bound by any particular theory, by varying the amount of EG material at different depths of the prepreg, different sound frequency can be absorbed and/or reflected at different levels of the prepreg.

In other configurations, a distribution of expandable graphite materials in a prepreg can be provided by coupling a skin or other material comprising expandable graphite materials to the prepreg. Referring to FIG. 2C, a skin 270 comprising expandable graphite materials is shown as being disposed on a prepreg 260 comprising a thermoplastic material, reinforcing fibers and expandable graphite materials. While not required, the skin 270 is typically present at a much lower thickness than the thickness of the prepreg 260. In addition, a discernible interface is typically present between the skin 270 and the interface 260, whereas coupling of two prepregs to each other, as described in connection with FIG. 2B, generally does not result in any discernible interface in the finally coupled prepreg 250. In other instances, the skin 270 can be melted into the prepreg 260 to couple the skin 270 and the prepreg 260 to leave a coupled skin/prepreg composite material without any substantial interface. If desired and as described in more detail below, an additional skin, which may or may not comprise expandable graphite materials, can also be coupled to the prepreg on an opposite side from the skin 270. While the exact composition of the skin 270 may vary, in some instances, the skin 270 may be a porous structure to permit sound waves to pass through the skin 270 and into the prepreg 260. In other instances, the skin 270 may be substantially closed or non-porous so that sound waves entering into the prepreg 260 from surface 262 will be reflected back into the prepreg 260 by the skin 270.

In certain configurations, the thermoplastic material of the prepreg may be present in fiber form, particle form, resin form or other suitable forms. In some instances, the thermoplastic material used in the prepreg can be present in particle form and have an average particle size that is substantially the same as the average particle size of the expandable graphite materials. While not wishing to be bound by any particular scientific theory, by matching the particles sizes of the thermoplastic material and the expandable graphite materials, enhanced processing of the prepregs including, for example, increased loading of the expandable graphite materials in the prepreg can be achieved. In some instances, the average particle size of the expandable graphite materials and the average particle size of the thermoplastic material can vary by about 5% to about 10% and enhanced processing can still be achieved. In certain configurations, the average particle size of each of the thermoplastic material and the expandable graphite materials in the prepreg can differ by about 50 microns to about 100 microns. In some configurations, the average particle size of the expandable graphite is at least 50% of the average particle size of the thermoplastic material particles to provide for enhanced processing. In other instances, expandable graphite materials with an average particle size about the same as the average particle size of the thermoplastic material can be present along with expandable graphite materials of an average particle size that is different than the average particle size of the thermoplastic material. Even though the average particle size of the expandable graphite materials may differ, the chemical composition of the expandable graphite materials can be the same or can be different. In yet other configurations, two or more thermoplastic materials with different average particle sizes can be present. If desired, two expandable graphite materials with average particle sizes that are substantially the same as the average particle sizes of the thermoplastic materials can be present. The two expandable graphite materials may be chemically the same or may be chemically distinct. Similarly, the thermoplastic materials can be chemically the same (but have a different average particle size) or can be chemically distinct.

In certain examples, the prepreg 100 generally comprises a substantial amount of open cell structure such that void space is present in the prepreg. For example, the core layer may comprise a void content or porosity of 0-30%, 10-40%, 20-50%, 30-60%, 40-70%, 50-80%, 60-90%, 0-40%,0-50%,0-60%,0-70%,0-80%,0-90%, 10-50%, 10-60%, 10-70%, 10-80%, 10-90%, 10-95%, 20-60%, 20-70%, 20-80%, 20-90%, 20-95%, 30-70%, 30-80%, 30-90%, 30-95%, 40-80%, 40-90%, 40-95%, 50-90%, 50-95%, 60-95% 70-80%, 70-90%, 70-95%, 80-90%, 80-95% or any illustrative value within these exemplary ranges. In some instances, the prepreg comprises a porosity or void content of greater than 0%, e.g., is not fully consolidated, up to about 95%. Unless otherwise stated, the reference to the prepreg comprising a certain void content or porosity is based on the total volume of the prepreg and not necessarily the total volume of the prepreg plus any other materials or layers coupled to the prepreg.

In some examples, at least 10 percent of the void space of the prepreg may be occupied by one or more EG materials, e.g., at least 30%, 40% or 50% of the void space of the prepreg is occupied by EG. As noted herein, the porous nature of the prepreg results in air being present within the voids. Air generally does not absorb sound to any substantial degree. By loading EG material into at least 50 percent of the void space of the prepreg, enhanced sound absorption can be achieved. In some examples, substantially all void space, e.g., 95%, 97.5% or 99% or more, of the prepreg comprises at least one EG molecule present. By including EG material in substantially all void space of the prepreg, increased sound absorption over a larger surface area can be achieved.

In certain examples, the high porosity present in the prepreg permits trapping of expandable graphite materials within the pores of the prepreg and/or capture of the EG by the thermoplastic material. For example, expandable graphite materials can reside in the void space in a non-covalently bonded manner. The presence of the expandable graphite materials in the void space can permit sound waves to be absorbed and/or deflected by, at least in part, the EG materials in the void space. For example, the expandable graphite materials can be effective to absorb certain frequencies of sound and either alter those frequencies or dissipate the sound energy through vibrations or other non-acoustic means. In some instances, the EG materials may directly receive incident sound waves, whereas in other instances the sound waves may first pass through a skin or other material or the sound waves may first be reflected by a skin or other material.

According to the invention, the thermoplastic material of then prepregs comprise thermoplastic polyolefin material. In certain examples, the thermoplastic material of the prepregs described herein may comprise, at least in part, one or more of polyethylene, polypropylene, polystyrene, acrylonitrylstyrene, butadiene, polyethyleneterephthalate, polybutyleneterephthalate, polybutylenetetrachlorate, and polyvinyl chloride, both plasticized and unplasticized, and blends of these materials with each other or other polymeric materials. Other suitable thermoplastics include, but are not limited to, polyarylene ethers, polycarbonates, polyestercarbonates, thermoplastic polyesters, polyimides, polyetherimides, polyamides, acrylonitrile-butylacrylate-styrene polymers, amorphous nylon, polyarylene ether ketone, polyphenylene sulfide, polyaryl sulfone, polyether sulfone, liquid crystalline polymers, poly(1,4 phenylene) compounds commercially known as PARMAX^{®}, high heat polycarbonate such as Bayer's APEC^{®} PC, high temperature nylon, and silicones, as well as alloys and blends of these materials with each other or other polymeric materials. The thermoplastic material used to form the prepreg can be used in powder form, resin form, rosin form, fiber form or other suitable forms. Illustrative thermoplastic materials in various forms are described herein and are also described, for example in U.S. Publication Nos. 20130244528 and US20120065283. The exact amount of thermoplastic material present in the prepreg can vary and illustrative amounts range from about 20% by weight to about 80% by weight.

According to the invention, the fibers used are reinforcing glass fibers.

In certain examples, the fibers of the prepregs described herein can comprise glass fibers, carbon fibers, graphite fibers, synthetic organic fibers, particularly high modulus organic fibers such as, for example, para- and meta-aramid fibers, nylon fibers, polyester fibers, or any of the high melt flow index resins described herein that are suitable for use as fibers, natural fibers such as hemp, sisal, jute, flax, coir, kenaf and cellulosic fibers, mineral fibers such as basalt, mineral wool (e.g., rock or slag wool), wollastonite, alumina silica, and the like, or mixtures thereof, metal fibers, metalized natural and/or synthetic fibers, ceramic fibers, yarn fibers, or mixtures thereof. In some examples, any of the aforementioned fibers can be chemically treated prior to use to provide desired functional groups or to impart other physical properties to the fibers, e.g., may be chemically treated so that they can react with the thermoplastic material, the expandable graphite materials or both. In some instances, the fibers used in the prepreg can first be reacted with the expandable graphite material to provide a derivatized fiber that is then mixed with the thermoplastic material. Alternatively, the expandable graphite material can be reacted with the thermoplastic material of the prepreg to provide a derivatized thermoplastic material that is then mixed with the fibers. The glass fiber content in the prepreg is 30 to 60 percent by weight of the prepreg. The particular size and/or orientation of the fibers used may depend, at least in part, on the polymer material used and/or the desired properties of the resulting prepreg. Suitable additional types of fibers, fiber sizes and amounts will be readily selected by the person of ordinary skill in the art, given the benefit of this disclosure. **In** one non-limiting illustration, fibers dispersed within a thermoplastic material and expandable graphite material to provide a prepreg generally have a diameter of greater than about 5 microns, more particularly from about 5 microns to about 22 microns, and a length of from about 5 mm to about 200 mm; more particularly, the fiber diameter may be from about microns to about 22 microns and the fiber length may be from about 5 mm to about 75 mm.

In certain examples, the expandable graphite materials of the prepregs described herein comprise one or more graphene based materials typically present in stacked molecular layers. While not wishing to be bound by any particular theory, the stacking of the layers may act to transfer sound energy between layers and alter the frequency of the sound waves. In some examples, enough expandable graphite materials are present to provide a desired sound absorption coefficient as tested by ASTM E1050 dated 2010. In some instances, the EG material may be present at about 10-20% by weight in the prepreg, more particularly about 10-15 % by weight in the prepreg. The exact type of expandable graphite materials used in the prepreg can depend on numerous factors including, for example, the desired sound absorption, the particular sound frequencies to be absorbed, etc.. Illustrative commercially available expandable graphite materials suitable to absorb sound are available, for example, from Asbury Carbons (Asbury, NJ).

While not wishing to be bound by any particular reaction, expandable graphite materials can generally be produced by acidifying a graphite ore. Acidification results in an intercalation process, e.g., where sulfuric acid acts as an intercalator. The solution can then be neutralized to provide a series of layers of sheets of hexagonal carbon-carbon bonded materials. The layers are generally flat and interact with additional hexagonal carbon-carbon layers to provide a layered sheet structure. The layered sheet structure can be held together through covalent bonding or electrostatic interactions (or both) between sheets. By not lofting the prepregs and core layers described herein, the sheets remain in proximity to each other and can transfer sound energy from one layer to the next. The expandable graphite material can be present in many forms including flake form, particle form or other forms. In some instances, the expandable graphite material is present in particle form and may comprise an average particle size of at least 30 microns, more particularly at least 50 microns, e.g., at least 100 microns, 200 microns or 300 microns, for example.

In some configurations, the prepreg may be a substantially halogen free or halogen free prepreg to meet the restrictions on hazardous substances requirements for certain applications. In other instances, the prepreg may comprise a halogenated flame retardant agent such as, for example, a halogenated flame retardant that comprises one of more of F, Cl, Br, I, and At or compounds that including such halogens, e.g., tetrabromo bisphenol-A polycarbonate or monohalo-, dihalo-, trihalo- or tetrahalo- polycarbonates. In some instances, the thermoplastic material used in the prepregs and cores may comprise one or more halogens to impart some flame retardancy without the addition of another flame retardant agent. Where halogenated flame retardants are present, the flame retardant is desirably present in a flame retardant amount, which can vary depending on the other components which are present. For example, the halogenated flame retardant may be present in about 0.1 weight percent to about 15 weight percent (based on the weight of the prepreg), more particularly about 1 weight percent to about 13 weight percent, e.g., about 5 weight percent to about 13 weight percent. If desired, two different halogenated flame retardants may be added to the prepregs. In other instances, a non-halogenated flame retardant agent such as, for example, a flame retardant agent comprising one or more of N, P, As, Sb, Bi, S, Se, and Te can be added. In some examples, the non-halogenated flame retardant may comprise a phosphorated material so the prepregs may be more environmentally friendly. Where non-halogenated or substantially halogen free flame retardants are present, the flame retardant is desirably present in a flame retardant amount, which can vary depending on the other components which are present. For example, the substantially halogen free flame retardant may be present in about 0.1 weight percent to about 15 weight percent (based on the weight of the prepreg), more particularly about 1 weight percent to about 13 weight percent, e.g., about 5 weight percent to about 13 weight percent based on the weight of the prepreg. If desired, two different substantially halogen free flame retardants may be added to the prepregs. In certain instances, the prepregs described herein may comprise one or more halogenated flame retardants in combination with one or more substantially halogen free flame retardants. Where two different flame retardants are present, the combination of the two flame retardants may be present in a flame retardant amount, which can vary depending on the other components which are present. For example, the total weight of flame retardants present may be about 0.1 weight percent to about 20 weight percent (based on the weight of the prepreg), more particularly about 1 weight percent to about 15 weight percent, e.g., about 2 weight percent to about 14 weight percent based on the weight of the prepreg. The flame retardant agents used in the prepregs described herein can be added to the mixture comprising the expandable graphite material, thermoplastic material and fibers (prior to disposal of the mixture on a wire screen or other processing component) or can be added after the prepreg is formed.

In certain configurations, the articles described herein comprise a porous core. In certain examples, the porous core comprises one or more thermoplastic materials and a plurality of fibers that can be held in place by the formed thermoplastic material in a web or network structure to provide a plurality of open cells, void space or a web in the core. Expandable graphite materials is present in the void space of the core, e.g., in the open cells of a web formed from the reinforcing fibers held together by the thermoplastic material. This can be in a manner where the expandable graphite materials generally do not covalently bond with the thermoplastic materials and/or the fibers. For example, the thermoplastic materials and/or the fibers can be selected so that they are generally inert or non-reactive with the expandable graphite materials. Even though the expandable graphite material may not covalently bond to the thermoplastic material and/or the fibers, there typically is covalent bonding present in or within the expandable graphite material itself, e.g., the expandable graphite material layers may be associated with each other through one or more intercalating agents. In other instances, it may be desirable to covalently bond the expandable graphite materials to the thermoplastic materials, the fibers or both to provide some covalently bonded expandable graphite materials in the core. Even where bonded expandable graphite materials are present in the core, the expandable graphite materials desirably can still have enough degrees of freedom to absorb incident sound energy to reduce transmitted sound through an article comprising the core. In some instances, both covalently bonded expandable graphite materials and non-covalently bonded expandable graphite materials may also be present in the core. While some configurations of the core may comprise expandable graphite materials where about 100% of the expandable graphite materials are non-covalently bonded, weak interactions such as van der Waals' interactions or electrostatic interactions can take place between the expandable graphite materials and the other components of the core., e.g., charge-charge interactions or hydrophobic interactions can take place between the various components present in the core. In some instances, these weak interactions permit transfer of energy from one EG sheet to another EG sheet within a particular cell of the web of the core.

In certain configurations, a core similar to the prepreg of FIG. 1 can be produced. The core comprises expandable graphite materials dispersed throughout the core. In some instances, the expandable graphite material dispersion is substantially homogeneous or substantially uniform from a first surface to a second surface of the core. As described in more detail herein, to achieve such substantially homogeneous or substantially uniform distribution of expandable graphite materials in the core, the components of the core are mixed together to form a dispersion. Mixing can be performed until the dispersion comprises a substantially homogeneous or substantially uniform mixture of the expandable graphite materials, the thermoplastic materials and the fibers in the dispersion. The core is formed as described herein, by disposing the dispersion on a wire screen using a suitable laying process followed by compressing and/or curing of the thermoplastic material of the core. In other configurations, not according to the invention, it may be desirable to provide a gradient distribution of expandable graphite materials from one surface of the core to the other surface of the core. In some configurations, a substantially uniform distribution of expandable graphite materials is present in a core and then additional expandable graphite materials are added to one side of the core to provide a gradient distribution. Such additional expandable graphite materials can be added directly to the core, e.g., by spraying or coating a solution comprising the expandable graphite material, or can be added by coupling a skin, additional prepreg or core or other component comprising expandable graphite materials to the core. For example, a first core and a second core disposed on the first core can provide a composite article. Each of the cores may comprise a substantially uniform distribution of expandable graphite materials, but the amount and/or type of expandable graphite materials in the two cores can be different, e.g., the loading rates can be different or the materials themselves may be different. If desired, however, only one of the cores may comprise expandable graphite material and the other core may not comprise materials other than expandable graphite materials, e.g., a microsphere lofting agent. In some instances, the microspheres may be present in combination with the expandable graphite material or may be present in one of the cores without any expandable graphite material. The thermoplastic materials of the cores can be melted to provide a single combined core including materials from the two cores. The result of melting of the cores is a composite core with a gradient distribution of expandable graphite materials. In some instances, the surface of the core where sound waves are incident may comprise higher levels of EG materials, whereas in other instances, the surface of the core further from a surface where sound waves are incident may comprise higher EG levels. In other configurations, a distribution of expandable graphite materials in a core can be provided by coupling a skin or other material comprising expandable graphite materials to the core. In other instances, the skin can be melted into the core to couple the skin and the core to leave a coupled skin/core composite material without any substantial interface. If desired and as described in more detail below, an additional skin, which may or may not comprise expandable graphite materials can also be coupled to the core on an opposite side from the first skin.

In certain configurations, the thermoplastic material of the core may be used to in the core in a fiber form, particle form, resin form or other suitable forms. In some examples, the thermoplastic material used in the core can be present in particle form and have an average particle size that is substantially the same as the average particle size of the expandable graphite materials. By matching the particles sizes of the thermoplastic material and the expandable graphite materials, enhanced processing of the cores including, for example, increased retention of the expandable graphite materials in the core, which can act to increase the level of sound absorption by the core. In some instances, the average particle size of the expandable graphite materials and the average particle size of the thermoplastic material can vary by about 5% to about 10% and enhanced processing can still be achieved. In certain configurations, the average particle size of each of the thermoplastic material and the expandable graphite materials in the core can range from about 50 microns to about 900 microns. In other instances, expandable graphite materials with an average particle size about the same as the average particle size of the thermoplastic material can be present along with expandable graphite materials of an average particle size that is different than the average particle size of the thermoplastic material. Even though the average particle size of the expandable graphite materials may differ, the chemical composition of the expandable graphite materials can be the same or can be different. In yet other configurations, two or more thermoplastic materials with different average particle sizes can be present. If desired, two expandable graphite materials with average particle sizes that are substantially the same as the average particle sizes of the two thermoplastic materials can be present in the core. The two expandable graphite materials may be chemically the same or may be chemically distinct. Similarly, the thermoplastic materials can be chemically the same (but have a different average particle size) or can be chemically distinct.

In certain examples, the core generally comprises a substantial amount of open cell structure such that void space is present in the core. For example, the core layer may comprise a void content or porosity of 0-30%, 10-40%, 20-50%, 30-60%, 40-70%, 50-80%, 60-90%, 0-40%,0-50%,0-60%,0-70%,0-80%,0-90%, 5-30%, 5-40%, 5-50%, 5-60%, 5-70%, 5-80%, 5-90%, 5-95%, 10-50%, 10-60%, 10-70%, 10-80%, 10-90%, 10-95%, 20-60%, 20-70%, 20-80%, 20-90%, 20-95%, 30-70%, 30-80%, 30-90%, 30-95%, 40-80%, 40-90%, 40-95%, 50-90%, 50-95%, 60-95% 70-80%, 70-90%, 70-95%, 80-90%, 80-95% or any illustrative value within these exemplary ranges. In some instances, the core comprises a porosity or void content of greater than 0%, e.g., is not fully consolidated, up to about 95%. Unless otherwise stated, the reference to the core comprising a certain void content or porosity is based on the total volume of the core and not necessarily the total volume of the core plus any other materials or layers coupled to the core. Compared to a prepreg, the porosity of the core can be the same or can be different. For example, in many instances, a prepreg is formed into a core by passing a prepreg through a set of rollers or by pressing one surfaces of the prepreg. In such instances, the porosity of the core may be different than the porosity of the prepreg, e.g., can be lower. In some instances, the porosity of the core is intentionally selected to be less than a comparable prepreg to provide for increased lofting of the core into a final formed article or product.

In some examples, at least 10 percent of the void space of the core may be occupied by one or more EG materials, e.g., at least 30%, 40% or 50% of the void space of the core is occupied by EG. As noted herein, the porous nature of the core results in air being present within the voids. Air generally does not absorb sound to any substantial degree. By loading EG material into at least 50 percent of the void space of the core, enhanced sound absorption can be achieved. In some examples, substantially all void space, e.g., 95%, 97.5% or 99% or more, of the core comprises at least one EG molecule or EG sheet present. By including EG material in substantially all void space of the core, increased sound absorption over a larger surface area can be achieved.

In certain examples, the high porosity present in the core permits trapping of expandable graphite materials within the pores of the core. For example, expandable graphite materials can reside in the void space in a non-covalently bonded manner. Application of sound waves to the EG material in the core can act to absorb the sound energy, reduce the amplitude of the sound energy or alter the frequency of the sound energy. For example, the expandable graphite materials can be operative as a sound absorber such that application of an incident sound wave alters the amplitude and/or frequency of any sound waves passed by the core. In some instances, the core comprising the EG material may be suitably thin to position the various EG sheets sufficiently close to each other to permit sound energy to be transferred between adjacent EG sheets. For example, lofting of the EG material can act to increase the thickness of the core as EG sheets are positioned further from each other. This lofting can act to position the EG sheets to far from each other to permit effective energy transfer. By keeping the core layer thin, e.g., 4 mm or less thick, 3 mm or less thick, 2 mm or less thick or even 1 mm or less thick, sound energy transfer between EG sheets can be enhanced.

In certain examples, the thermoplastic material of the cores described herein comprises a thermoplastic polyolefin. The thermoplastic material used to form the core can be used in powder form, resin form, rosin form, fiber form or other suitable forms. Illustrative thermoplastic materials in various forms are described herein and are also described, for example in U.S. Publication Nos. 20130244528 and US20120065283. The exact amount of thermoplastic material present in the core can vary and illustrative amounts range from percentages as defined in claim 1.

In certain examples, the fibers of the cores described herein comprise glass fibers. The fibers can be chemically treated prior to use to provide desired functional groups or to impart other physical properties to the fibers, e.g., may be chemically treated so that they can react with the thermoplastic material, the expandable graphite materials or both. In some instances, the fibers used in the core can first be reacted with the expandable graphite material to provide a derivatized fiber that is then mixed with the thermoplastic material. Alternatively, the expandable graphite material can be reacted with the thermoplastic material of the core to provide a derivatized thermoplastic material that is then mixed with the fibers. The fiber content in the core is from 30 to 60 percent by weight of the core. The particular size and/or orientation of the fibers used may depend, at least in part, on the polymer material used and/or the desired properties of the resulting core. Suitable additional types of fibers, fiber sizes and amounts will be readily selected by the person of ordinary skill in the art, given the benefit of this disclosure. In one non-limiting illustration, fibers dispersed within a thermoplastic material and expandable graphite material to provide a core generally have a diameter of greater than about 5 microns, more particularly from about 5 microns to about 22 microns, and a length of from about 5 mm to about 200 mm; more particularly, the fiber diameter may be from about microns to about 22 microns and the fiber length may be from about 5 mm to about 75 mm.

In certain examples, the expandable graphite materials of the cores described herein comprise one or more graphene based materials typically present in stacked molecular layers. While not wishing to be bound by any particular theory, the stacking of the layers may act to transfer sound energy between layers and alter the frequency of the sound waves. In some examples, enough expandable graphite materials are present to provide a desired sound absorption coefficient as tested by ASTM E1050 dated 2010. The EG material is present at about 5-15% by weight in the core. The exact type of expandable graphite materials used in the core can depend on numerous factors including, for example, the desired sound absorption, the particular sound frequencies to be absorbed, etc.. Illustrative commercially available expandable graphite materials suitable to absorb sound are available from Asbury Carbons (Asbury, NJ).

While not wishing to be bound by any particular reaction, expandable graphite materials can generally be produced by acidifying a graphite ore. Acidification results in an intercalation process, e.g., where sulfuric acid acts as an intercalator. The solution can then be neutralized to provide a series of layers of sheets of hexagonal carbon-carbon bonded materials. The layers are generally flat and interact with additional hexagonal carbon-carbon layers to provide a layered sheet structure. The layered sheet structure can be held together through covalent bonding or electrostatic interactions (or both) between sheets. By not lofting the core layers and/or by compressing the core layers to a suitable thickness, the EG sheets remain in proximity to each other and can transfer sound energy from one sheet layer to the next. The expandable graphite material can be present in many forms including flake form, particle form or other forms. In some instances, the expandable graphite material is present in particle form and may comprise an average particle size of at least 30 microns, 50 microns, 100 microns, 200 microns or 300 microns, for example.

In some instances, the core may be a substantially halogen free or halogen free core to meet the restrictions on hazardous substances requirements for certain applications. In other instances, the core may comprise a halogenated flame retardant agent such as, for example, a halogenated flame retardant that comprises one of more of F, Cl, Br, I, and At or compounds that including such halogens, e.g., tetrabromo bisphenol-A polycarbonate or monohalo-, dihalo-, trihalo- or tetrahalo- polycarbonates. In some instances, the thermoplastic material used in the cores may comprise one or more halogens to impart some flame retardancy without the addition of another flame retardant agent. Where halogenated flame retardants are present, the flame retardant is desirably present in a flame retardant amount, which can vary depending on the other components which are present. For example, the halogenated flame retardant may be present in about 0.1 weight percent to about 15 weight percent (based on the weight of the core), more particularly about 1 weight percent to about 13 weight percent, e.g., about 5 weight percent to about 13 weight percent. If desired, two different halogenated flame retardants may be added to the core. In other instances, a non-halogenated flame retardant agent such as, for example, a flame retardant agent comprising one or more of N, P, As, Sb, Bi, S, Se, and Te can be added. In some examples, the non-halogenated flame retardant may comprise a phosphorated material so the cores may be more environmentally friendly. Where non-halogenated or substantially halogen free flame retardants are present, the flame retardant is desirably present in a flame retardant amount, which can vary depending on the other components which are present. For example, the substantially halogen free flame retardant may be present in about 0.1 weight percent to about 15 weight percent (based on the weight of the core), more particularly about 1 weight percent to about 13 weight percent, e.g., about 5 weight percent to about 13 weight percent based on the weight of the cores. If desired, two different substantially halogen free flame retardants may be added to the cores. In certain instances, the cores described herein may comprise one or more halogenated flame retardants in combination with one or more substantially halogen free flame retardants. Where two different flame retardants are present, the combination of the two flame retardants may be present in a flame retardant amount, which can vary depending on the other components which are present. For example, the total weight of flame retardants present may be about 0.1 weight percent to about 20 weight percent (based on the weight of the core), more particularly about 1 weight percent to about 15 weight percent, e.g., about 2 weight percent to about 14 weight percent based on the weight of the core. The flame retardant agents used in the cores described herein can be added to the mixture comprising the expandable graphite material, thermoplastic material and fibers (prior to disposal of the mixture on a wire screen or other processing component) or can be added after the core is cured, e.g., by soaking the core in the flame retardant agent or spraying flame retardant agent on the core.

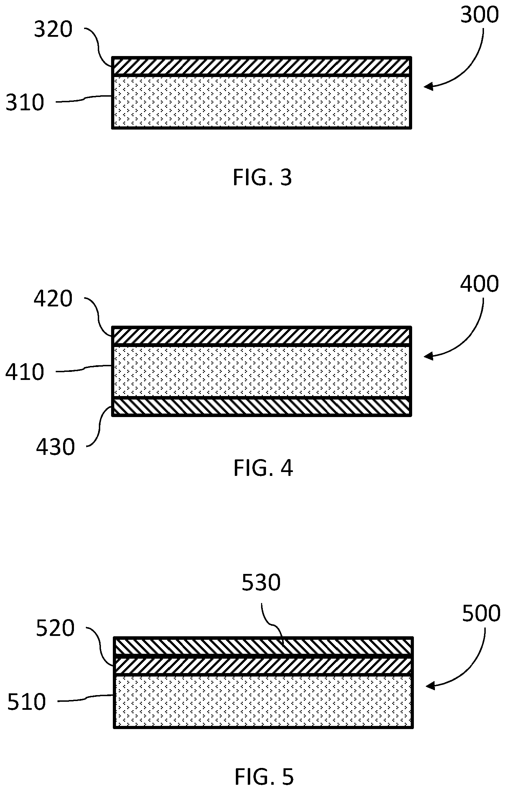

In certain examples, the prepregs or cores described herein may comprise one or more skins disposed on a surface of the prepreg or core to provide an article. Referring to FIG. 3, an article 300 comprises a prepreg or core 310 that comprises a thermoplastic material, a plurality of fibers and expandable graphite materials disposed in the void space of the prepreg or core. The article 300 comprises a first skin 320 disposed on the prepreg or core 310. As noted herein, where sound energy is incident on the skin 320 and passes into the core 310, the skin 320 desirably comprises an open cell structure to permit sound waves to pass through the skin 320, to at least some degree, and into the core 310. Where the skin 320 is present on a surface opposite of the core 310 where the sound energy is incident, the skin 320 may comprise a closed cell structure to reflect sound waves back into the core 310. Depending on the positon of the skin 320 relative to the incident sound energy, the skin 320 may comprise, for example, a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 310. In other instances, the skin 320 may comprise a limiting oxygen index greater than about 22, as measured per ISO 4589 dated 1996. Where a thermoplastic film is present as (or as part of) the skin 320, the thermoplastic film may comprise at least one of poly(ether imide), poly(ether ketone), poly(ether-ether ketone), poly(phenylene sulfide), poly(arylene sulfone), poly(ether sulfone), poly(amideimide), poly(1,4-phenylene), polycarbonate, nylon, and silicone. Where a fiber based scrim is present as (or as part of) the skin 320, the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present as (or as part of) the skin 320, the coating may comprise at least one of unsaturated polyurethanes, vinyl esters, phenolics and epoxies. Where an inorganic coating is present as (or as part of) the skin 320, the inorganic coating may comprise minerals containing cations selected from Ca, Mg, Ba, Si, Zn, Ti and Al or may comprise at least one of gypsum, calcium carbonate and mortar. Where a non-woven fabric is present as (or as part of) the skin 320, the non-woven fabric may comprise a thermoplastic material, a thermal setting binder, inorganic fibers, metal fibers, metallized inorganic fibers and metallized synthetic fibers. The prepreg or core 310 may comprise any of the materials described herein in connection with prepregs and cores, e.g., a thermoplastic material, reinforcing fibers and expandable graphite material dispersed in the prepreg or core 310, e.g., expandable graphite material dispersed in a substantially uniform distribution from one surface to another surface of the prepreg or core 310. If desired, the skin 320 may comprise an expandable graphite material as well.

In certain configurations, the prepregs and cores described herein can be used to provide an article comprising a skin on each side of the prepreg or core. Referring to FIG. 4, an article 400 is shown comprising a prepreg or core 410, a first skin 420 disposed on a first surface of the prepreg or core 410 and a second skin 430 disposed on the prepreg or core 410. The prepreg or core 410 may comprise any of the materials described herein in connection with prepregs and cores, e.g., a thermoplastic material, reinforcing fibers and expandable graphite material dispersed in the prepreg or core 410, e.g., expandable graphite material dispersed in a substantially uniform distribution from one surface to another surface of the prepreg or core 410. Each of the first skin 420 and the second skin 430 can be independently selected from a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 410. In other instances, the skin 420 or the skin 430 (or both) may comprise a limiting oxygen index greater than about 22, as measured per ISO 4589 dated 1996. Where a thermoplastic film is present as (or as part of) the skin 420 or the skin 430 (or both), the thermoplastic film may comprise at least one of poly(ether imide), poly(ether ketone), poly(ether-ether ketone), poly(phenylene sulfide), poly(arylene sulfone), poly(ether sulfone), poly(amide-imide), poly(1,4-phenylene), polycarbonate, nylon, and silicone. Where a fiber based scrim is present as (or as part of) the skin 420 or the skin 430 (or both), the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present as (or as part of) the skin 420 or the skin 430 (or both), the coating may comprise at least one of unsaturated polyurethanes, vinyl esters, phenolics and epoxies. Where an inorganic coating is present as (or as part of) the skin 420 or the skin 430 (or both), the inorganic coating may comprise minerals containing cations selected from Ca, Mg, Ba, Si, Zn, Ti and Al or may comprise at least one of gypsum, calcium carbonate and mortar. Where a non-woven fabric is present as (or as part of) the skin 420 or the skin 430 (or both), the non-woven fabric may comprise a thermoplastic material, a thermal setting binder, inorganic fibers, metal fibers, metallized inorganic fibers and metallized synthetic fibers. If desired, one or both of the skins 420, 430 may comprise an expandable graphite material as well. As noted herein, one of the skins 420, 430 desirably comprises an open cell structure to permit sound energy to pass into the core 410 and the other skin may comprise a closed cell structure to reflect sound waves back into the core 410. In other configurations, each of the skins 420, 430 may comprise an open cell structure and the article 400 may comprise an additional component or layer which may include a closed cell structure that can reflect energy back through the skin and into the core 410. In some instances, one or more areas of the skins that are adjacent to the core may comprise sound absorption regions that can assist in absorption of any sound reflected back from the core 410.

In certain instances, an article can comprise a prepreg or core, at least one skin disposed on the prepreg or core and a decorative or cover layer disposed on the skin. Referring to FIG. 5, an article 500 is shown comprising a prepreg or core 510, a skin 520 disposed on a first surface of the prepreg or core 510 and a decorative layer 530 disposed on the skin 520. The prepreg or core 510 may comprise any of the materials described herein in connection with prepregs and cores, e.g., a thermoplastic material, reinforcing fibers and expandable graphite material dispersed in the prepreg or core 510, e.g., expandable graphite material dispersed in a substantially uniform distribution from one surface to another surface of the prepreg or core 510. The skin 520 may comprise, for example, a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 510. In other instances, the skin 520 may comprise a limiting oxygen index greater than about 22, as measured per ISO 4589 dated 1996. Where a thermoplastic film is present, the thermoplastic film may comprise at least one of poly(ether imide), poly(ether ketone), poly(ether-ether ketone), poly(phenylene sulfide), poly(arylene sulfone), poly(ether sulfone), poly(amide-imide), poly(1,4-phenylene), polycarbonate, nylon, and silicone. Where a fiber based scrim is present, the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present, the coating may comprise at least one of unsaturated polyurethanes, vinyl esters, phenolics and epoxies. Where an inorganic coating is present, the inorganic coating may comprise minerals containing cations selected from Ca, Mg, Ba, Si, Zn, Ti and Al or may comprise at least one of gypsum, calcium carbonate and mortar. Where a non-woven fabric is present, the non-woven fabric may comprise a thermoplastic material, a thermal setting binder, inorganic fibers, metal fibers, metallized inorganic fibers and metallized synthetic fibers. The decorative layer 530 may be formed, e.g., from a thermoplastic film of polyvinyl chloride, polyolefins, thermoplastic polyesters, thermoplastic elastomers, or the like. The decorative layer 530 may also be a multi-layered structure that includes a foam core formed from, e.g., polypropylene, polyethylene, polyvinyl chloride, polyurethane, and the like. A fabric may be bonded to the foam core, such as woven fabrics made from natural and synthetic fibers, organic fiber non-woven fabric after needle punching or the like, raised fabric, knitted goods, flocked fabric, or other such materials. The fabric may also be bonded to the foam core with a thermoplastic adhesive, including pressure sensitive adhesives and hot melt adhesives, such as polyamides, modified polyolefins, urethanes and polyolefins. The decorative layer 530 may also be produced using spunbond, thermal bonded, spun lace, melt-blown, wet-laid, and/or dry-laid processes. In some configurations, the skin 520 may comprise an open cell structure to permit sound energy to pass into the core layer 510 where sound energy is incident on the decorative layer 530. Where sound energy is incident on a surface opposite from the decorative layer 530, the decorative layer may comprise a closed cell structure or layer to prevent sound energy from passing through the layer 530 and to reflect sound energy back into the core 510.

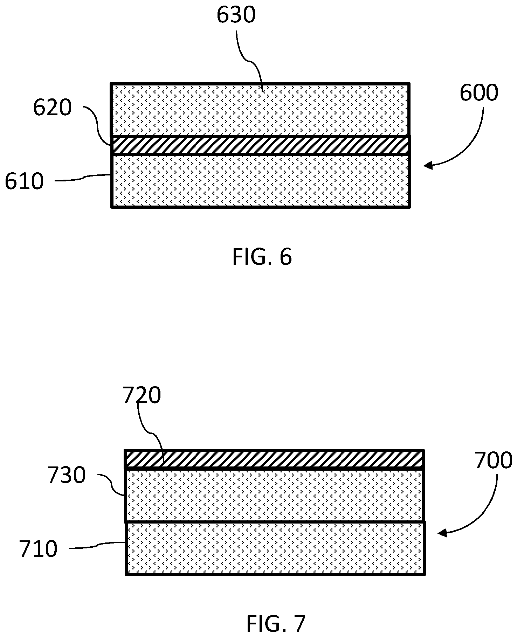

In certain configurations, two or more prepregs or cores can be coupled to each other through an intervening or intermediate layer such as, for example, a skin. Referring to FIG. 6, an article 600 comprising a prepreg or core 610 coupled to a prepreg or core 630 through an intermediate layer 620 is shown. Each of the prepregs or cores 610, 630 may be the same or may be different. In some instances, the thermoplastic materials and fibers of the prepregs or cores 610, 630 are the same, but the expandable graphite material loading or type of expandable graphite material present in the prepregs or cores 610, 630 is different. In other instances, the type and/or amount of expandable graphite material in the prepregs or cores 610, 630 may be the same and one or both of the thermoplastic material and/or the fibers may be different, e.g., may be chemically different or may be present in differ amounts. In some instances, covalently bonded expandable graphite material may be present in one or more both of the prepregs or cores 610, 630. In other instances, non-covalently bonded expandable graphite material may be present in one or both of the prepregs or cores 610, 630. If desired, one or more suitable flame retardant agents, e.g., halogenated or non-halogenated flame retardant agents may be present in one or both of the cores 610, 630. While the thickness of the prepregs or cores 610, 630 is shown as being about the same in FIG. 6, the thickness of the prepregs or cores 610, 630 can vary. Where a "thick" core is desired and where high sound absorption is desired, it may be desirable to couple two "thin" core layers to each other through skin layer 620 to keep the EG sheets close to each other in the core layer while still providing a composite with a desired final thickness. In some configurations, one of the prepregs or cores 610, 630 may comprise a lofting agent other than expandable graphite material, e.g., microspheres. The microspheres may be present in combination with the expandable graphite material or may be present in one of the prepregs or cores 610, 630 without any expandable graphite material. The intermediate layer 620 may take the form of a skin as described herein. The skin 620 desirably comprises an open cell structure to permit sound energy to pass between the core layers 610, 630. For example, the intermediate layer 620 may comprise, for example, a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 610. In other instances, the layer 620 may comprise a limiting oxygen index greater than about 22, as measured per ISO 4589 dated 1996. Where a thermoplastic film is present, the thermoplastic film may comprise at least one of poly(ether imide), poly(ether ketone), poly(ether-ether ketone), poly(phenylene sulfide), poly(arylene sulfone), poly(ether sulfone), poly(amide-imide), poly(1,4-phenylene), polycarbonate, nylon, and silicone. Where a fiber based scrim is present as or in the layer 620, the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present as or in the layer 620, the coating may comprise at least one of unsaturated polyurethanes, vinyl esters, phenolics and epoxies. Where an inorganic coating is present as or in the layer 620, the inorganic coating may comprise minerals containing cations selected from Ca, Mg, Ba, Si, Zn, Ti and Al or may comprise at least one of gypsum, calcium carbonate and mortar. Where a non-woven fabric is present as or in the layer 620, the non-woven fabric may comprise a thermoplastic material, a thermal setting binder, inorganic fibers, metal fibers, metallized inorganic fibers and metallized synthetic fibers. While not shown, a decorative layer can be coupled to either (or both) of the prepregs or cores 610, 630. As noted herein, the decorative layer may be formed, e.g., from a thermoplastic film of polyvinyl chloride, polyolefins, thermoplastic polyesters, thermoplastic elastomers, or the like. The decorative layer may also be a multi-layered structure that includes a foam core formed from, e.g., polypropylene, polyethylene, polyvinyl chloride, polyurethane, and the like. A fabric may be bonded to the foam core, such as woven fabrics made from natural and synthetic fibers, organic fiber non- woven fabric after needle punching or the like, raised fabric, knitted goods, flocked fabric, or other such materials. The fabric may also be bonded to the foam core with a thermoplastic adhesive, including pressure sensitive adhesives and hot melt adhesives, such as polyamides, modified polyolefins, urethanes and polyolefins. The decorative layer may also be produced using spunbond, thermal bonded, spun lace, melt-blown, wet-laid, and/or dry-laid processes. If desired, the decorative layer may comprise a closed cell to reflect sound energy back into the core layers 610, 630.

In certain examples, two or more prepregs or cores can be coupled to each other and then a skin may be disposed on one surface of the prepregs or cores. Referring to FIG. 7, an article 700 comprising a prepreg or core 710 coupled to a prepreg or core 730 and a skin 720 disposed on the core 730 is shown. Each of the prepregs or cores 710, 720 may be the same or may be different. In some instances, the thermoplastic materials and fibers of the cores 710, 730 are the same, but the expandable graphite material loading or type of expandable graphite material present in the cores 710, 730 is different. In other instances, the type and/or amount of expandable graphite material in the cores 710, 730 may be the same and one or both of the thermoplastic material and/or the fibers may be different, e.g., may be chemically different or may be present in differ amounts. In some instances, covalently bonded expandable graphite material may be present in one or more both of the prepregs or cores 710, 730. In other instances, non-covalently bonded expandable graphite material may be present in one or both of the prepregs or cores 710, 720. If desired, one or more suitable flame retardant agents, e.g., halogenated or non-halogenated flame retardant agents may be present in one or both of the prepregs or cores 710, 730. While the thickness of the prepregs or cores 710, 730 is shown as being about the same in FIG. 7, the thickness of the prepregs or cores 710, 730 can vary. It may be desirable to build up a composite article using successive thin core layers to provide a desired overall core thickness. For example, by coupling two or more thin core layers, e.g., having a thickness of 2 mm or less, to each other rather than using a lofted core layer of 4 mm, the EG sheet layers may be kept closer to each other to transfer sound energy between the sheets. In some configurations, one of the prepregs or cores 710, 730 may comprise a material other than expandable graphite material, e.g., may comprise microspheres or other materials. The materials may be present in combination with the expandable graphite material or may be present in one of the prepregs or cores 710, 730 without any expandable graphite material. The skin 720 may comprise, for example, a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 730. In other instances, the skin 720 may comprise a limiting oxygen index greater than about 22, as measured per ISO 4589 dated 1996. Where a thermoplastic film is present as or in the skin 720, the thermoplastic film may comprise at least one of poly(ether imide), poly(ether ketone), poly(ether-ether ketone), poly(phenylene sulfide), poly(arylene sulfone), poly(ether sulfone), poly(amide-imide), poly(1,4-phenylene), polycarbonate, nylon, and silicone. Where a fiber based scrim is present as or in the skin 720, the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present as or in the skin 720, the coating may comprise at least one of unsaturated polyurethanes, vinyl esters, phenolics and epoxies. Where an inorganic coating is present as or in the skin 720, the inorganic coating may comprise minerals containing cations selected from Ca, Mg, Ba, Si, Zn, Ti and Al or may comprise at least one of gypsum, calcium carbonate and mortar. Where a non-woven fabric is present as or in the skin 720, the non-woven fabric may comprise a thermoplastic material, a thermal setting binder, inorganic fibers, metal fibers, metallized inorganic fibers and metallized synthetic fibers. Depending on the final configuration of the article 700, the skin 720 may be an open cell skin to permit sound energy to pass through the skin or may be a closed cell skin to reflect sound energy back into the cores 710, 730. While not shown, a decorative layer can be coupled to the skin 720 or to a surface of the prepreg or core 710. As noted herein, the decorative layer may be formed, e.g., from a thermoplastic film of polyvinyl chloride, polyolefins, thermoplastic polyesters, thermoplastic elastomers, or the like. The decorative layer may also be a multi-layered structure that includes a foam core formed from, e.g., polypropylene, polyethylene, polyvinyl chloride, polyurethane, and the like. A fabric may be bonded to the foam core, such as woven fabrics made from natural and synthetic fibers, organic fiber non- woven fabric after needle punching or the like, raised fabric, knitted goods, flocked fabric, or other such materials. The fabric may also be bonded to the foam core with a thermoplastic adhesive, including pressure sensitive adhesives and hot melt adhesives, such as polyamides, modified polyolefins, urethanes and polyolefins. The decorative layer may also be produced using spunbond, thermal bonded, spun lace, melt-blown, wet-laid, and/or dry-laid processes. Depending on positioning of the decorative layer relative to incident sound energy, the decorative layer may comprise an open cell structure or a closed cell structure.

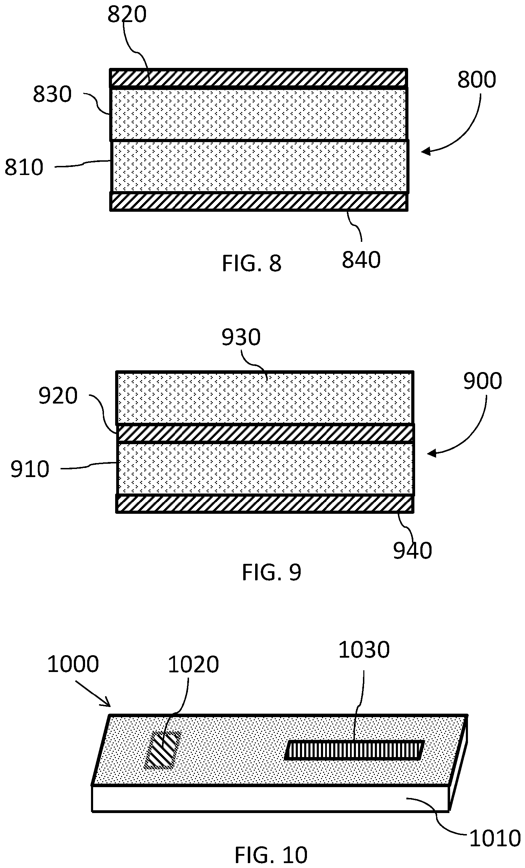

In certain examples, two or more prepregs or cores can be coupled to each other and then a skin may be disposed on each surface of the prepregs or cores. Referring to FIG. 8, an article 800 comprising a prepreg or core 810 coupled to a prepreg or core 830, a first skin 820 disposed on the core 830, and a second skin 840 disposed on the core 810 is shown. Each of the prepregs or cores 810, 830 may be the same or may be different. In some instances, the thermoplastic materials and fibers of the prepregs or cores 810, 830 are the same, but the expandable graphite material loading or type of expandable graphite material present in the prepregs or cores 810, 830 is different. In other instances, the type and/or amount of expandable graphite material in the prepregs or cores 810, 830 may be the same and one or both of the thermoplastic material and/or the fibers may be different, e.g., may be chemically different or may be present in differ amounts. In some instances, covalently bonded expandable graphite material may be present in one or more both of the prepregs or cores 810, 830. In other instances, non-covalently bonded expandable graphite material may be present in one or both of the prepregs or cores 810, 830. If desired, one or more suitable flame retardant agents, e.g., halogenated or non-halogenated flame retardant agents may be present in one or both of the prepregs or cores 810, 830. While the thickness of the prepregs or cores 810, 830 is shown as being about the same in FIG. 8, the thickness of the prepregs or cores 810, 830 can vary. As noted herein, it may be desirable to use two or more core layers coupled to each other rather than a single core layer of increased thickness. In some configurations, one of the prepregs or cores 810, 830 may comprise a material other than expandable graphite material, e.g., may comprise microspheres. The other material may be present in combination with the expandable graphite material or may be present in one of the cores 810, 830 without any expandable graphite material. Each of the skins 820, 840 may independently comprise, for example, a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 830. In other instances, the skins 820, 840 may independently comprise a limiting oxygen index greater than about 22, as measured per ISO 4589 dated 1996. Where a thermoplastic film is present as or in the skin 820 or the skin 840 (or both), the thermoplastic film may comprise at least one of poly(ether imide), poly(ether ketone), poly(ether-ether ketone), poly(phenylene sulfide), poly(arylene sulfone), poly(ether sulfone), poly(amide-imide), poly(1,4-phenylene), polycarbonate, nylon, and silicone. Where a fiber based scrim is present as or in the skin 820 or the skin 840 (or both), the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present as or in the skin 820 or the skin 840 (or both), the coating may comprise at least one of unsaturated polyurethanes, vinyl esters, phenolics and epoxies. Where an inorganic coating is present as or in the skin 820 or the skin 840 (or both), the inorganic coating may comprise minerals containing cations selected from Ca, Mg, Ba, Si, Zn, Ti and Al or may comprise at least one of gypsum, calcium carbonate and mortar. Where a non-woven fabric is present as or in the skin 820 or the skin 840 (or both), the non-woven fabric may comprise a thermoplastic material, a thermal setting binder, inorganic fibers, metal fibers, metallized inorganic fibers and metallized synthetic fibers. If desired, one of the skins 820, 40 may comprise an open cell structure and the other skin may comprise a closed cell structure. Alternatively, each of the skins 820, 840 may comprise an open cell structure and another component may be present on the article. For example, while not shown, a decorative layer can be coupled to the skin 820 or to the skin 840 (or both). As noted herein, the decorative layer may be formed, e.g., from a thermoplastic film of polyvinyl chloride, polyolefins, thermoplastic polyesters, thermoplastic elastomers, or the like. The decorative layer may also be a multi-layered structure that includes a foam core formed from, e.g., polypropylene, polyethylene, polyvinyl chloride, polyurethane, and the like. A fabric may be bonded to the foam core, such as woven fabrics made from natural and synthetic fibers, organic fiber non- woven fabric after needle punching or the like, raised fabric, knitted goods, flocked fabric, or other such materials. The fabric may also be bonded to the foam core with a thermoplastic adhesive, including pressure sensitive adhesives and hot melt adhesives, such as polyamides, modified polyolefins, urethanes and polyolefins. The decorative layer may also be produced using spunbond, thermal bonded, spun lace, melt-blown, wet-laid, and/or dry-laid processes.

In certain examples, two or more prepregs or cores can be coupled to each other through one or more skin layers. Referring to FIG. 9, an article 900 comprising a prepreg or core 910 coupled to a prepreg or core 930 through an intermediate layer 920, and a skin 940 disposed on the core 910 is shown. If desired, the skin 940 can instead be disposed on the prepreg or core 930 or another skin (not shown) can be disposed on the prepreg or core 920. Each of the prepregs or cores 910, 930 may be the same or may be different. In some instances, the thermoplastic materials and fibers of the prepregs or cores 910, 930 are the same, but the expandable graphite material loading or type of expandable graphite material present in the prepregs or cores 910, 930 is different. In other instances, the type and/or amount of expandable graphite material in the prepregs or cores 910, 930 may be the same and one or both of the thermoplastic material and/or the fibers may be different, e.g., may be chemically different or may be present in differ amounts. In some instances, covalently bonded expandable graphite material may be present in one or more both of the prepregs or cores 910, 930. In other instances, non-covalently bonded expandable graphite material may be present in one or both of the prepregs or cores 910, 930. If desired, one or more suitable flame retardant agents, e.g., halogenated or non-halogenated flame retardant agents may be present in one or both of the prepregs or cores 910, 930. While the thickness of the prepregs or cores 910, 930 is shown as being about the same in FIG. 9, the thickness of the prepregs or cores 910, 930 can vary. For example, two thin core layers can be coupled to each other instead of using a comparably thick single core layer which has been lofted to some degree. In some configurations, one of the prepregs or cores 910, 930 may comprise a material other than expandable graphite material, e.g., microspheres. The other material may be present in combination with the expandable graphite material or may be present in one of the cores 910, 930 without any expandable graphite material. The layer 920 and the skin 940 may independently comprise, for example, a film (e.g., thermoplastic film or elastomeric film), a frim, a scrim (e.g., fiber based scrim), a foil, a woven fabric, a non-woven fabric or be present as an inorganic coating, an organic coating, or a thermoset coating disposed on the prepreg or core 830. In other instances, the layer 920 and the skin 940 may independently comprise a limiting oxygen index greater than about 22, as measured per ISO 4589 dated 1996. Where a thermoplastic film is present as or in the layer 920 or the skin 940 (or both), the thermoplastic film may comprise at least one of poly(ether imide), poly(ether ketone), poly(ether-ether ketone), poly(phenylene sulfide), poly(arylene sulfone), poly(ether sulfone), poly(amide-imide), poly(1,4-phenylene), polycarbonate, nylon, and silicone. Where a fiber based scrim is present as or in the layer 920 or the skin 940 (or both), the fiber based scrim may comprise at least one of glass fibers, aramid fibers, graphite fibers, carbon fibers, inorganic mineral fibers, metal fibers, metalized synthetic fibers, and metalized inorganic fibers. Where a thermoset coating is present as or in the layer 920 or the skin 940 (or both), the coating may comprise at least one of unsaturated polyurethanes, vinyl esters, phenolics and epoxies. Where an inorganic coating is present as or in the layer 920 or the skin 940 (or both), the inorganic coating may comprise minerals containing cations selected from Ca, Mg, Ba, Si, Zn, Ti and Al or may comprise at least one of gypsum, calcium carbonate and mortar. Where a non-woven fabric is present as or in the layer 920 or the skin 940 (or both), the non-woven fabric may comprise a thermoplastic material, a thermal setting binder, inorganic fibers, metal fibers, metallized inorganic fibers and metallized synthetic fibers. In some instances, the skin 920 desirably comprises an open cell structure to permit sound energy to pass between the core layers 910, 930. Similarly, skin 940 may comprise an open cell structure or a closed cell structure depending on the orientation of the article 900 relative to incident sound energy. While not shown, a decorative layer can be coupled to the skin 940 or the prepreg or core 930 (or both). As noted herein, the decorative layer may be formed, e.g., from a thermoplastic film of polyvinyl chloride, polyolefins, thermoplastic polyesters, thermoplastic elastomers, or the like. The decorative layer may also be a multi-layered structure that includes a foam core formed from, e.g., polypropylene, polyethylene, polyvinyl chloride, polyurethane, and the like. A fabric may be bonded to the foam core, such as woven fabrics made from natural and synthetic fibers, organic fiber non- woven fabric after needle punching or the like, raised fabric, knitted goods, flocked fabric, or other such materials. The fabric may also be bonded to the foam core with a thermoplastic adhesive, including pressure sensitive adhesives and hot melt adhesives, such as polyamides, modified polyolefins, urethanes and polyolefins. The decorative layer may also be produced using spunbond, thermal bonded, spun lace, melt-blown, wet-laid, and/or dry-laid processes.

In certain examples, strips of materials can be disposed on a prepreg or core layer. Referring to FIG. 10, an article 1000 comprising a prepreg or core 1010 with strips 1020, 1030 disposed on different areas of the prepreg or core 1010 is shown. If desired, such strips can be present on any of the illustrative examples shown in FIGS. 1-9. The strips 1020, 1030 may be the same or may be different. In some instances, the strips 1020, 1030 may comprise expandable graphite material as noted herein. For example, the strips may comprise expandable graphite material that is non-covalently bonded to other materials in the strips or may comprise expandable graphite material that is covalently bonded to other materials in the strips. In some instances, the strips 1020, 1030 may independently take the form of a prepreg or core as described herein. In other configurations, the strips may take the form of a skin or layer as described herein. In certain instances, the strips can be disposed, for example, on areas of the article 100 where it may be desirable to provide structural reinforcement or on areas where a differential thickness is desired. In other configurations, strips comprising EG material may be disposed at areas where increased sound absorption is desired.

In some examples, the prepregs and cores may include additional materials or additives to impart desired physical or chemical properties. For example, one or more dyes, texturizing agents, colorants, viscosity modifiers, smoke suppressants, synergistic materials, lofting agents, particles, powders, biocidal agents, foams or other materials can be mixed with or added to the prepregs or the cores. In some instances, the prepregs or cores may comprise one or more smoke suppressant compositions in the amount of about 0.2 weight percent to about 10 weight percent. Illustrative smoke suppressant compositions include, but are not limited to, stannates, zinc borates, zinc molybdate, magnesium silicates, calcium zinc molybdate, calcium silicates, calcium hydroxides, and mixtures thereof. If desired, a synergist material can be present to enhance the physical properties of the prepregs or cores. For example, a synergist that enhances flame retardancy may be present. If desired, a material that enhances sound absorption of the EG materials may also be present.

In other instances, the prepregs or cores described herein may comprise a thermosetting material in a desired amount, e.g., in a minor amount less than about 50 weight percent based on the total weight of the prepreg or core, to impart desired properties to the core. The thermosetting material may be mixed with the thermoplastic material or may be added as a coating on one or more surfaces of the prepregs or cores.

In certain examples, the prepregs or cores described herein can be configured as (or used in) a glass mat thermoplastic composite (GMT) or a light weight reinforced thermoplastic (LWRT). One such LWRT is prepared by HANWHA AZDEL, Inc. and sold under the trademark SUPERLITE^{®} material. SUPERLITE^{®} mat loaded with expandable graphite materials can provide desirable attributed including, for example, flame retardancy and enhanced processing capabilities. The areal density of such a GMT or LWRT can range from about 300 grams per square meter (gsm) of the GMT or LWRT to about 4000 gsm, although the areal density may be less than 400 gsm or greater than 4000 gsm depending on the specific application needs. In some examples, the upper density can be less than about 4000 gsm. In certain instances, the GMT or the LWRT may comprise expandable graphite materials disposed in void space of the porous GMT or the LWRT. For example, non-covalently bonded expandable graphite materials can be present in void space of the GMT or the LWRT. In other instances, covalently-bonded expandable graphite materials can be present in void space of the GMT or the LWRT. In yet other configurations, both non-covalently bonded expandable graphite materials and covalently bonded expandable graphite materials can be present in the GMT or the LWRT. Where a GMT or LWRT prepreg or core is used in combination with expandable graphite materials, the basis weight of the GMT or LWRT can be reduced to less than 800 gsm, 600 gsm or 400 gsm, for example, while still providing suitable performance properties. In some examples, the overall thickness of the GMT or LWRT may be 4 mm or less, more particularly 3 mm or less, e.g., 2 mm or less or even 1 mm or less.

In producing the prepregs and cores described herein, it may be desirable to use a wet-laid process. For example, a liquid or fluid medium comprising dispersed material, e.g., thermoplastic materials, fibers and expandable graphite material optionally with any one or more additives described herein (e.g., flame retardant agents), may be stirred or agitated in the presence of a gas, e.g., air or other gas. The dispersion may then be laid onto a support, e.g., a wire screen or other support material, to provide a substantially uniform distribution of expandable graphite material in the laid down material. To increase expandable graphite material dispersion and/or uniformity, the stirred dispersion may comprise one or more active agents, e.g., anionic, cationic, or non-ionic such as, for example, those sold under the name ACE liquid by Industrial Soaps Ltd., that sold as TEXOFOR^{®} FN 15 material, by Glover Chemicals Ltd., and those sold as AMINE Fb 19 material by Float-Ore Ltd. These agents can assist in dispersal of air in the liquid dispersion. The components can be added to a mixing tank, flotation cell or other suitable devices in the presence of air to provide the dispersion. While an aqueous dispersion is desirably used, one or more non-aqueous fluids may also be present to assist in dispersion, alter the viscosity of the fluid or otherwise impart a desired physical or chemical property to the dispersion or the prepreg, core or article.

In certain instances, after the dispersion has been mixed for a sufficient period, the fluid with the suspended materials can be disposed onto a screen, moving wire or other suitable support structure to provide a web of laid down material. Suction or reduced pressure may be provided to the web to remove any liquid from laid down material to leave behind the thermoplastic material, expandable graphite material and any other materials that are present, e.g., fibers, additives, etc. As noted herein, by selecting the expandable graphite material particle size to be substantially the same as or greater than an average particle size of the thermoplastic material, enhanced retention of the expandable graphite material (compared to the level of microsphere retention) can be achieved. The resulting web can be dried and optionally consolidated or pressed to a desired thickness prior to full curing to provide a desired prepreg, core or article. As noted herein, the cured prepreg or core may be used "as-is" without lofting or further processing of the article comprising the core layer. In some instances, an additive or additional expandable graphite material can be added to the web prior to drying, fully curing and/or consolidation or pressing to provide a desired prepreg, core or article. In other instances, the expandable graphite material may be added to the web subsequent to drying, curing, etc. to provide a desired prepreg, core or article. While wet laid processes may be used, depending on the nature of the thermoplastic material, the expandable graphite material and other materials present, it may be desirable to instead use an air laid process, a dry blend process, a carding and needle process, or other known process that are employed for making non-woven products. In some instances, additional expandable graphite material can be sprayed onto the surface of the prepreg or core after the prepreg or core has hardened to some degree by passing the board underneath a plurality of coating jets that are configured to spray the expandable graphite material at about a ninety degree angle to the prepreg or core surface.

In some configurations, the prepregs and cores described herein can be produced by combining a thermoplastic material, fibers, expandable graphite material in the presence of a surfactant in an aqueous solution or foam. The combined components can be mixed or agitated for a sufficient time to disperse the various materials and provide a substantially homogeneous aqueous mixture of the materials. The dispersed mixture is then laid down on any suitable support structure, for example, a wire mesh or other mesh or support having a desired porosity. Water can then be evacuated through the wire mesh forming a web. The web is dried and heated above the softening temperature of the thermoplastic powder. The web is then cooled and pressed to a predetermined thickness to produce a composite sheet having a void content of between about 1 percent to about 95 percent with EG material present on the voids. In an alternate example, the aqueous foam also includes a binder material.

In certain examples, a prepreg or core in the form of a porous GMT can be produced. In certain instances, the GMT can be generally prepared using chopped glass fibers, a thermoplastic material, expandable graphite materials and an optional thermoplastic polymer film or films and/or woven or non-woven fabrics made with glass fibers or thermoplastic resin fibers such as, for example, polypropylene (PP), polybutylene terephthalate (PBT), polyethylene terephthalate (PET), polycarbonate (PC), a blend of PC/PBT, or a blend of PC/PET. In some examples, a PP, a PBT, a PET, a PC/PET blend or a PC/PBT blend are can be used as the high melt flow index resin. To produce the glass mat, a thermoplastic material, reinforcing materials, expandable graphite materials and/or other additives can be added or metered into a dispersing foam contained in an open top mixing tank fitted with an impeller. Without wishing to be bound by any particular theory, the presence of trapped pockets of air of the foam can assist in dispersing the glass fibers, the thermoplastic material and the expandable graphite materials. In some examples, the dispersed mixture of glass and resin can be pumped to a head-box located above a wire section of a paper machine via a distribution manifold. The foam, not the glass fiber, expandable graphite materials or thermoplastic, can then be removed as the dispersed mixture is provided to a moving wire screen using a vacuum, continuously producing a uniform, fibrous wet web. The wet web can be passed through a dryer at a suitable temperature to reduce moisture content and to melt or soften the thermoplastic material. When the hot web exits the dryer, a surface layer such as, for example, a film may be laminated onto the web by passing the web of glass fiber, expandable graphite materials, thermoplastic material and film through the nip of a set of heated rollers. If desired, additional layers such as, for example, a non-woven and/or woven fabric layer may also be attached along with the film to one side or to both sides of the web to facilitate ease of handling the glass fiber-reinforced mat. The composite can then be passed through tension rolls and continuously cut (guillotined) into the desired size for later forming into an end product article. Further information concerning the preparation of such GMT composites, including suitable materials and processing conditions used in forming such composites, are described, for example, in U.S. Pat. Nos. 6,923,494, 4,978,489, 4,944,843, 4,964,935, 4,734,321, 5,053,449, 4,925,615, 5,609,966 and U.S. Patent Application Publication Nos. US 2005/0082881, US2005/0228108, US 2005/0217932, US 2005/0215698, US 2005/0164023, and US 2005/0161865.

In certain examples, the presence of EG materials in combination with a thermoplastic material and reinforcing fibers provides better acoustic control than can be accomplished without EG material in the core. For example, by selecting EG materials which can absorb sound waves of a desired frequency, the frequencies and/or amplitude of sound transmitted through the composite article may be reduced. Further, depending on the particular EG material selected and the loading level, both sound absorption and flame retardancy may be provided.

Illustrative sound frequencies which can be absorbed to at least some degree by a composite article comprising a core with EG material in the void space include, but are not limited to, those frequencies in the 1200-6000 Hz range, though other frequencies may also be absorbed at least to some degree. In some instances, the particular composition of the core and skin layers can be tuned to provide a desired absorption coefficient over a smaller frequency window, e.g., 1200-2000 Hz, or other selected frequency windows.

In certain instances, a method of producing a composite article comprises combining a thermoplastic material, reinforcing fibers and expandable graphite particles in a mixture to form an agitated aqueous foam. The foam is disposed onto a wire support, and the water is evacuated to form a web or open cell structure comprising the thermoplastic material, fibers and graphite materials. In some instances, the web is then heated to a first temperature above the melting temperature of the thermoplastic material, in which the first temperature is below a loft onset temperature of the expandable graphite particles so substantially no loft occurs. If desired, the core may be compressed prior to fully curing to position the EG sheets closer to each other in the core layer. In other instances, the web can be heating using heating conditions that melt the thermoplastic material, e.g., convection heating, but do not substantially loft the expandable graphite particles. If desired, pressure can then be applied to the web, e.g., using nip rollers or other devices, to provide a thermoplastic composite sheet comprising the expandable graphite particles dispersed in the web.

In certain examples, the expandable graphite materials described herein may be used in a thermoplastic composite article that meets class A requirements as tested by ASTM E84 dated 2009. For example, many existing articles that meet class A requirements as tested by ASTM E84 dated 2009 may comprise substantial amounts of flame retardant agents, e.g., 30 weight percent flame retardant such as magnesium hydroxide or even 40 weight percent flame retardant. These high amounts of flame retardant can adversely affect the thermoplastic core layer. In addition, the presence of a thermoplastic material in the core layer can render the core layer flammable. By including a suitable or effective amount of EG material in the core layer, the core layer and any articles comprising it may meet the Class A requirements of ASTM E84.

In some examples, a composite article comprising a thermoplastic fiber-reinforced porous core layer and a skin disposed on at least one surface of the porous core layer, the porous core layer comprising a web formed from a plurality of reinforcing fibers, an expandable graphite material and a thermoplastic material, the composite article comprising an effective amount of expandable graphite particles to meet Class A requirements as tested by ASTM E84 dated 2009 can be used in setting such as office furniture, seating, etc. In some instances, the thermoplastic material comprises a polyolefin and the reinforcing fibers comprise glass fibers. In other examples, the glass fibers are present from about 30 to 60 weight percent, the expandable graphite particles are present at least at 10 percent by weight with the balance of the core layer comprising the thermoplastic material. If desired, the skin layer may be one or more of a scrim, an open-celled film or a closed cell film. In some instances, an adhesive layer may be present between the core layer and the skin layer. In certain examples, the article may comprise a second skin layer disposed on an opposite surface of the core layer. In some configurations, the core layer does not comprise any added flame retardant agent, e.g., the EG material can function as a flame retardant agent but no other flame retardant agents such as magnesium hydroxide or halogenated flame retardants are present. In certain examples, the article may comprise a first adhesive layer between the core layer and the skin layer and a second adhesive layer between the core layer and the second skin layer. In other examples, the article may comprise a decorative layer disposed on the skin layer. For example, in office applications it may be desirable to staple, glue or otherwise attach a fabric or covering to the article to provide for a more aesthetically pleasing article. In some examples, the EG materials used in article may comprise a carbon content of at least 85% by weight of the expandable graphite particles, a moisture content of less than 1% by weight of the expandable graphite particles, a sulfur content of less than 4% by weight of the expandable graphite particles, and an expansion ratio less than or equal to 290:1 g/cc or 280:1 g/cc or 270:1 g/cc of the expandable graphite particles and optionally a useful pH range of 1-6, 5-10, or 1-10.

In certain examples, a non-molded composite article comprises a thermoplastic fiber-reinforced porous core layer and a skin disposed on at least one surface of the porous core layer, the porous core layer comprising a compressed web formed from a plurality of reinforcing fibers held together by a thermoplastic material, in which the web comprises a plurality of voids comprising an expandable graphite material, the composite article comprising an effective amount of expandable graphite particles to meet Class A requirements as tested by ASTM E84 dated 2009 without molding of the composite article. In certain instances, the core layer does not comprise any added flame retardant materials, e.g., the EG material can function as a flame retardant agent but no other flame retardant agents such as magnesium hydroxide or halogenated flame retardants are present in the core layer. In some examples, the composite article has a thickness of less than 4 mm or less than 2 mm. In some instances, the expandable graphite material is present in a substantially non-lofted form in voids of the web. In other examples, the article may comprise a lofting agent, e.g., microspheres. In certain instances, the skin is configured as an open cell scrim or a closed cell scrim. In certain examples, the article may comprise an additional skin disposed on an opposite surface of the core layer. In other examples, the additional skin is configured as a closed cell scrim or an open cell scrim. In some configurations, expandable graphite particles in the article may comprise a carbon content of at least 85% by weight of the expandable graphite particles, a moisture content of less than 1% by weight of the expandable graphite particles, a sulfur content of less than 4% by weight of the expandable graphite particles, and an expansion ratio less than or equal to 290 g/cc, 280 g/cc or 270:1 g/cc of the expandable graphite particles and optionally a useful pH range of 1-6, 5-10 or 1-10.

In certain examples, a method of producing a thermoplastic composite article comprising a porous core layer comprising a plurality of reinforcing fibers, a thermoplastic material and expandable graphite particles by heating the reinforcing fibers, the thermoplastic material and the expandable graphite particles to a first temperature above a melting point of the thermoplastic material without any substantial lofting of the expandable graphite particles to form a web comprising the thermoplastic material, the expandable graphite particles and the reinforcing fibers, the thermoplastic composite article comprising an effective amount of the expandable graphite particles to meet class A requirements as tested by ASTM E84 dated 2009. In certain examples, the method comprises using the thermoplastic composite article as a building panel without molding the thermoplastic composite article. In other examples, the method comprises configuring the thermoplastic composite article without any additional flame retardant agent. In some instances, the method comprises configuring a thickness of the thermoplastic composite article to be no thicker than 4 mm. In some instances, the method comprises compressing the core layer of the thermoplastic article, prior to curing of the core layer, to a thickness of less than 4 mm. In additional configurations, the method comprises compressing the core layer of the thermoplastic article, prior to curing the core layer, to a thickness of less than 2 mm. In some examples, the method comprises configuring the thermoplastic composite article with a scrim on one surface of the thermoplastic composite article. In other examples, the method comprises configuring the thermoplastic composite article with an additional scrim on an opposite surface of the thermoplastic composite article, in which at least one of the scrim and the additional scrim comprises an open cell structure. In further examples, the method comprises configuring the porous core layer with about 35-55 weight percent glass fibers as the reinforcing fibers and at least 10 weight percent expandable graphite particles with the balance of the porous core layer comprising the thermoplastic material. In other examples, the method comprises selecting the expandable graphite particles to comprise a carbon content of at least 85% by weight of the expandable graphite particles, a moisture content of less than 1% by weight of the expandable graphite particles, to comprise a sulfur content of less than 4% by weight of the expandable graphite particles, and to comprise an expansion ratio less than or equal to 290 g/cc, 280 g/cc or 270:1 g/cc of the expandable graphite particles and optionally a useful pH range of 1-6, 5-10 or 1-10.

In certain examples, a method comprises combining a thermoplastic material, reinforcing fibers and expandable graphite particles in a mixture to form an agitated aqueous foam, disposing the agitated aqueous foam onto a wire support, evacuating the water to form a web, heating the web to a first temperature at or above the melting temperature of the thermoplastic material, in which the first temperature is selected so substantially no lofting of the expandable graphite particles occurs, compressing the web to a thickness of no more than 4 mm to provide a thermoplastic composite article; and using the provided thermoplastic composite article without any molding of the thermoplastic composite article, in which the thermoplastic composite article comprises an effective amount of the expandable graphite particles to meet Class A requirements as tested by ASTM E84 dated 2009. In some examples, the compressing step comprises passing the heated web through a set of rollers to provide the thickness of no more than 4 mm or no more than 2 mm. In some examples, the method may comprise mixing the agitated aqueous foam until the expandable graphite particles are homogeneously dispersed in the agitated aqueous foam. In other instances, the method may comprise applying a scrim to at least one surface of the thermoplastic composite article prior to compressing the article. In some instances, the method may comprise applying a scrim to at least one surface of the thermoplastic composite article after compressing the article. In other examples, the method may comprise compressing the article to a thickness of no more than 2 mm. In certain examples, the method may comprise configuring the web without any added flame retardant agent. In some instances, the method may comprise coupling the thermoplastic article to a second thermoplastic article comprising substantially the same composition and a different thickness as the thermoplastic article. In other examples, the thermoplastic article comprising the different thickness is no more than 4 mm thick or no more than 2 mm thick. In some instances, the EG material can be selected to comprise a carbon content of at least 85% by weight of the expandable graphite particles, a moisture content of less than 1% by weight of the expandable graphite particles, to comprise a sulfur content of less than 4% by weight of the expandable graphite particles, and to comprise an expansion ratio less than or equal to 290:1 g/cc or 280:1 g/cc or 270:1 g/cc of the expandable graphite particles and optionally a useful pH range of 1-6, 5-10 or 1-10.

In certain examples, a method of producing a thermoplastic composite article comprises combining a thermoplastic material, reinforcing fibers and non-lofted expandable graphite particles in a mixture to form an agitated aqueous foam, disposing the agitated aqueous foam onto a wire support, evacuating the water to form a web, heating the web to a first temperature at or above the melting temperature of the thermoplastic material, in which the first temperature is selected so substantially no loft of the non-lofted expandable graphite particles occurs, compressing the web to a first thickness, and disposing a skin on the compressed web to provide the thermoplastic composite article, in which the web of thermoplastic composite article comprises an effective amount of the non-lofted expandable graphite particles to meet Class A requirements as tested by ASTM E84 dated 2009. In some examples, the method comprises using the thermoplastic composite article as a building panel without molding the article. In further instances, the method comprises using the thermoplastic composite article as an automotive panel without molding of the article. In some examples, the method comprises using the thermoplastic composite article as a recreational vehicle panel without molding the article. In some configurations, the amount of expandable graphite particles in the web is selected so the article also comprises a sound absorption coefficient of at least 0.2 at 2400 Hz (or at least 0.2 at 2860 Hz) as tested by ASTM E1050 dated 2010 when the web is no thicker than 3.5 mm and without molding of the web. In certain examples, the method comprises disposing a decorative layer on the skin layer. In other examples, the method comprises coupling the compressed web to a second compressed web having substantially the same composition as the compressed web prior to disposing skin layer on the compressed web. In additional instances, the method comprises compressing the web to a second thickness less than the first thickness, in which compression of the web to the second thickness provides an increase in the sound absorption coefficient compared to the sound coefficient of the web at the first thickness. In some examples, the method comprises configuring the second thickness to be at least 50% less than the first thickness. In certain configurations, the method comprises selecting the expandable graphite particles to comprise a carbon content of at least 85% by weight of the expandable graphite particles, a moisture content of less than 1% by weight of the expandable graphite particles, to comprise a sulfur content of less than 4% by weight of the expandable graphite particles, and to comprise an expansion ratio less than or equal to 290 g/cc or 280 g/cc or 270:1 g/cc of the expandable graphite particles and optionally a useful pH range of 1-6, 5-10 or 1-10.

Certain examples are described below to illustrate better some of the novel aspects and configurations described herein.

### Example 1

Several acoustics measurements were performed using a composite article comprising a porous core (1000 gsm or 1200 gsm) including EG particles (greater than 300 micron average particle size, greater than 85% carbon, 0.9% moisture, about 3.2 percent sulfur) at about 5% by weight. The EG material did not experience any substantial expansion in preparation of the core layer. Pre-lofted (as-produced) and post-lofted articles (molded articles) were tested for their ability to absorb sound.

Table 1 lists the formulation and physical properties of the tested articles. All tested articles included a 90 gsm scrim on one side and a 20 gsm light weight scrim on the other side. All articles were tested as produced and at molded thicknesses of 2 mm, 4 mm and 6 mm. The production control article PC689 (XLT-H) was also molded. All articles were molded at a molding temperature of 220 deg. Celsius.

**Table 1**

| **Material** | **Expandable graphite** | **BW, gsm, total/substrate** | **Ash %** | **Thickness, mm** |
|---|---|---|---|---|
| **ST-10387** | 10% | 1110/1000 | 48.1 | 3.7 |
| **ST-10465** | 10% | 1310/1200 | 50.5 | 3.7 |
| **ST-10466** | 10% | 1310/1200 | 42.4 | 3.4 |
| **ST-10467** | 10% | 1310/1200 | 44.5 | 3.5 |
| **PC 689** | None | 1310/1200 | 35.6 | 3.0 |
| **ST-10763A** | 5% | 1310/1200 | 43.3 | 3.7 |
| **ST-10763B** | 5% | 1110/1000 | 42.4 | 3.1 |

### Example 2

All articles listed in Table 1 were molded to 2 mm, 4 mm and 6 mm and used as produced (no molding or lofting). Sound absorption tests according to ASTM E1050 dated 2010 were used to measure the acoustic absorption of each of the molded articles. Disks of 100 mm in diameter and 29 mm in diameter were punched from the molded articles. The HOF K81 scrim side was facing the sound resource in all measurements.

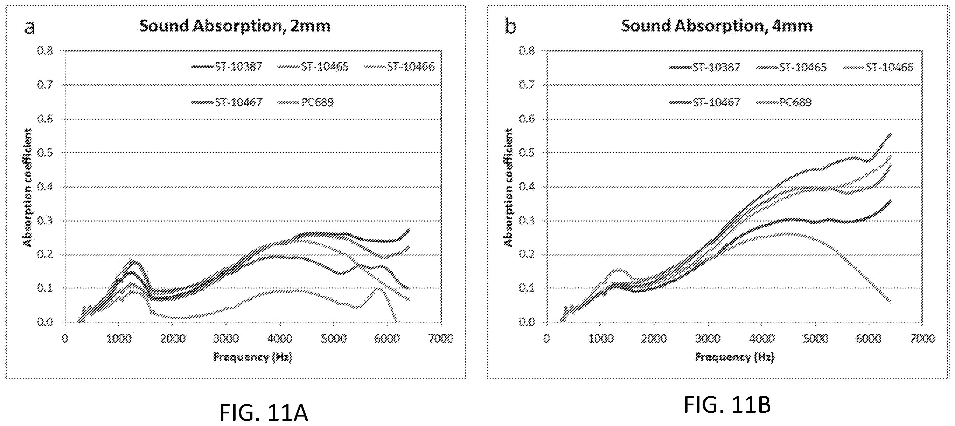

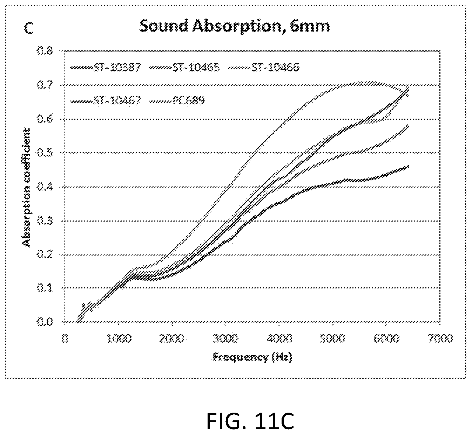

FIGS. 11A-11C shows the sound absorption coefficients at different frequencies for the different molded thickness articles. In general, sound absorption coefficients increase as the molded thickness increases. Sound absorption increases dramatically from 2 mm to 6 mm for the XLT-H control material where no EG material is present. Lower increases are observed where EG material is present in the core layer.

### Example 3

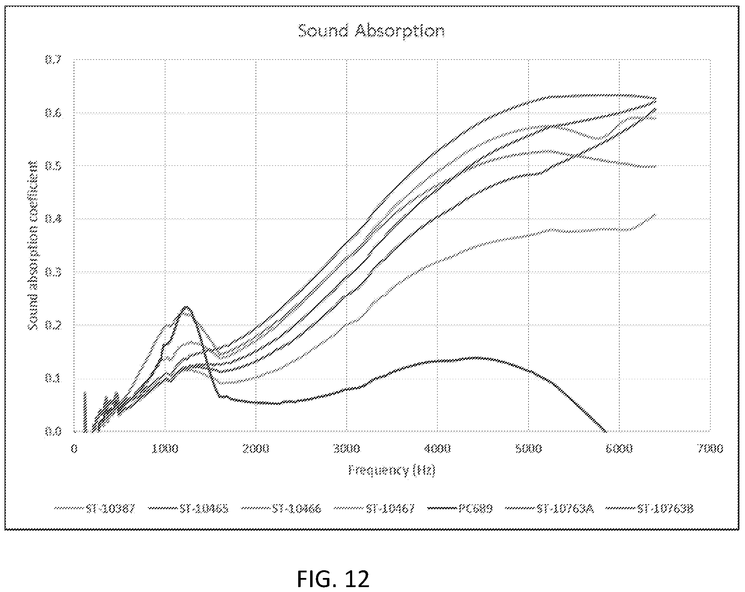

As-molded articles were also tested for their ability to absorb sound. As noted in Example 2, sound absorption generally increases as core thickness increases, particularly in the absence of any EG material. FIG. 12 shows the comparison of the different samples.

All test articles provided significant acoustic absorption improvements over the control material (PC689) in the 1500-6000 Hz range. All five 1200 gsm core materials (ST-10465, ST-10466, ST-10467, ST-10763 A, ST-10763B) show similar performance and better performance than the 1000 gsm core sample (ST-10387), but the lighter 1000 gsm sample still provided significantly more sound absorption than the control material without any EG particles.

The ST-10763A and ST-17063B articles had the highest sound absorption at high frequencies (6000 Hz) even though they included lower amounts (5% vs. 10%) of the EG material. In particular, in comparing the ST-10763A material with the ST-10465 material (both having a thickness of 3.7 mm and a basis weight of 1310 gsm), the sound absorption of the ST-10763A plateaus at about 5000 Hz, whereas the sound absorption for the ST-10465 material is significantly less at 5000 Hz.

### Example 4

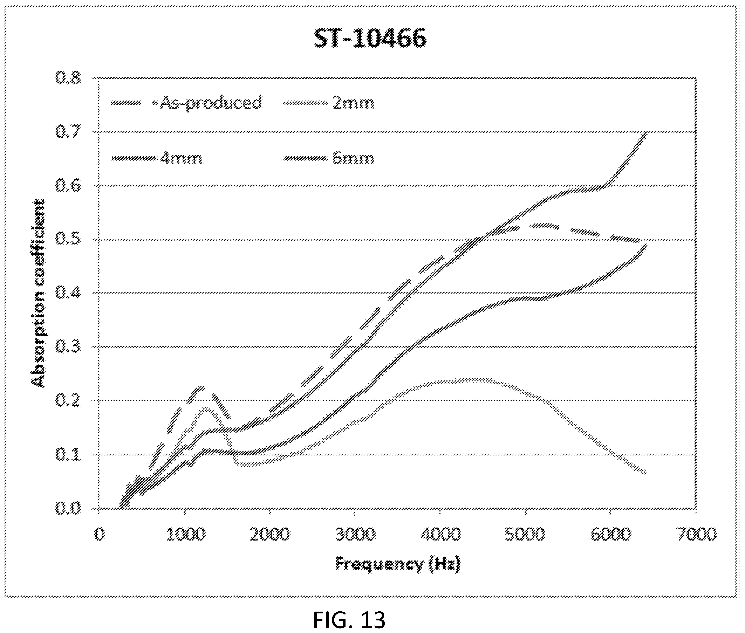

FIG. 13 shows a comparison in sound absorption performance using different molding conditions for the same article (ST-10466). As noted in FIG. 13, sound absorption where an EG material is present can decrease at higher molding thickness compared to an as-produced article. ST-10466 has an as produced thickness of 3.4 mm. Increasing the thickness from 3.4 mm to 4mm results in a reduction in sound absorption. The ST-10466 thickness needs to be increased to 6 mm to match the as produced sound absorption coefficient. The reduction in sound with increasing thickness may be due to disruption of the EG lattice sheet structure from the molding process. The as produced article has a higher sound absorption coefficient than the 2 mm, 4 mm and 6 mm thick molded articles from a frequency of about 400 Hz to about 4400 Hz. Only the 6 mm molded article had a higher sound absorption coefficient above 4400 Hz.

### Example 5

An article that meets ASTM E84, class a requirement can be produced using 10% of expandable graphite (average particle size greater than 300 microns), a 1200gsm core (45% nominal glass) with light weight scrims, such as 20gsm scrims on each surface of the 1200 gsm core. The article can meet the ASTM E84, class a requirements in an as-produced status.

### Example 6

An article that meets ASTM E84, class a requirement can be produced using 10% of expandable graphite (average particle size greater than 300 microns), a 1200gsm core (45% nominal glass) with light weight scrims, such as 20gsm scrims on each surface of the 1200 gsm core. The article can meet the ASTM E84, class a requirements in an as-produced state. The article can be produced without using any additional flame retardant agents other than the Asbury 3335.

When introducing elements of the examples disclosed herein, the articles "a," "an," "the" and "said" are intended to mean that there are one or more of the elements. The terms "comprising," "including" and "having" are intended to be open-ended and mean that there may be additional elements other than the listed elements. It will be recognized by the person of ordinary skill in the art, given the benefit of this disclosure, that various components of the examples can be interchanged or substituted with various components in other examples.

Although certain aspects, examples and embodiments have been described above, it will be recognized by the person of ordinary skill in the art, given the benefit of this disclosure, that additions, substitutions, modifications, and alterations of the disclosed illustrative aspects, examples and embodiments are possible.

## Claims

1. A method of producing a thermoplastic composite article comprising a porous core layer (310, 410, 510, 610, 710, 810, 910, 1010) comprising a plurality of reinforcing glass fibers, a thermoplastic polyolefin material and expandable graphite material, wherein the thermoplastic composite article further comprises a skin (270, 320, 420, 520, 620, 720, 820, 940) coupled to a first surface of the porous core layer (310, 410, 510, 610, 710, 810, 910, 1010), wherein the porous core layer comprises the reinforcing glass fibers from 30 to 60 weight percent and the expandable graphite material from 5 to 15 weight percent with the balance of the porous core layer comprising the thermoplastic polyolefin material, the method comprising:
combining the thermoplastic polyolefin material, the reinforcing glass fibers, and the expandable graphite material in a mixture to form an agitated aqueous foam;
disposing the agitated aqueous foam onto a wire support;
evacuating the water to form a web;
heating the web comprising the reinforcing glass fibers, the thermoplastic polyolefin material and the expandable graphite material to a first temperature above a melting point of the thermoplastic polyolefin material without any substantial lofting of the expandable graphite material;
compressing the heated web to a first thickness of no more than 4 mm to provide a porous core layer (310, 410, 510, 610, 710, 810, 910, 1010), wherein the porous core layer (310, 410, 510, 610, 710, 810, 910, 1010) comprises open cell structures formed from the reinforcing glass fibers and the thermoplastic polyolefin material after compression of the heated web, and wherein the expandable graphite material is present in the formed open cell structures of the porous core layer (310, 410, 510, 610, 710, 810, 910, 1010) in a substantially uniform distribution from the first surface to a second surface of the porous core layer (310, 410, 510, 610, 710, 810, 910, 1010); and
coupling the skin (270, 320, 420, 520, 620, 720, 820, 940) to the first surface of the porous core layer (310, 410, 510, 610, 710, 810, 910, 1010) either before compressing of the heated web or after compressing of the heated web to provide the thermoplastic composite article, wherein the skin (270, 320, 420, 520, 620, 720, 820, 940) comprises a scrim or a film, wherein the thermoplastic composite article provides a sound absorption coefficient in an as-produced state of the provided thermoplastic composite article of at least 0.2 at 2400 Hz as tested by ASTM E1050 dated 2010 when the porous core layer (270, 320, 420, 520, 620, 720, 820, 940) is no more than 4 mm thick.

2. The method of claim 1, further comprising using the thermoplastic composite article as a building panel without molding the thermoplastic composite article.

3. The method of claim 1, further comprising configuring a thickness of the thermoplastic composite article to be no thicker than 3.5 mm while providing the sound absorption coefficient of at least 0.2 at 2400 Hz as tested by ASTM E1050 dated 2010.

4. The method of claim 1, further comprising configuring a thickness of the thermoplastic composite article to be no thicker than 2 mm while providing the sound absorption coefficient of at least 0.2 at 2400 Hz as tested by ASTM E1050 dated 2010.

5. The method of claim 1, further comprising compressing the porous core layer (310, 410, 510, 610, 710, 810, 910, 1010) of the thermoplastic composite article to a thickness no thicker than 3.5 mm, and wherein the composite article has a sound absorption coefficient of at least 0.5 at a frequency of 4500 Hz as tested by ASTM E1050 dated 2010 when the porous core layer is no thicker than 3.5 mm.

6. The method of claim 1, further comprising compressing the porous core layer (310, 410, 510, 610, 710, 810, 910, 1010) of the thermoplastic composite article to a thickness of less than 2 mm.

7. The method of claim 1, further comprising coupling an open-celled film to the second surface of the porous core layer (310, 410, 510, 610, 710, 810, 910, 1010).

8. The method of claim 1, wherein the skin is a scrim (320) and further comprising coupling an additional scrim (430, 840) to the second surface of the porous core layer (310, 410, 510, 610, 710, 810, 910, 1010), in which at least one of the scrim (320) and the additional scrim (430, 840) comprises an open cell structure, and wherein the expandable graphite material forms a layered sheet structure within the open cell structures of the formed porous core layer (310, 410, 510, 610, 710, 810, 910, 1010) to maintain the sound absorption coefficient in the as-produced state of the porous core layer (310, 410, 510, 610, 710, 810, 910, 1010) of at least 0.2 at 2400 Hz as tested by ASTM E1050 dated 2010 when the porous core layer (310, 410, 510, 610, 710, 810, 910, 1010) is no more than 4 mm thick and in the presence of the open cell structure scrim.

9. The method of claim 1, further comprising configuring the porous core layer (310, 410, 510, 610, 710, 810, 910, 1010) with 35-55 weight percent reinforcing glass fibers and at least 10 weight percent expandable graphite material with the balance of the porous core layer comprising the thermoplastic polyolefin material.

10. The method of claim 9, further comprising selecting the expandable graphite material to comprise a carbon content of at least 85% by weight of the expandable graphite material, a moisture content of less than 1% by weight of the expandable graphite material, to comprise a sulfur content of less than 4% by weight of the expandable graphite material, to comprise an expansion ratio less than or equal to 270:1 g/cc of the expandable graphite material and optionally a useful pH range of 5-10.

11. The method of claim 1, in which the compressing step comprises passing the heated web through a set of rollers to provide the porous core layer with the thickness of no more than 4 mm.

12. The method of claim 1, further comprising mixing the agitated aqueous foam until the expandable graphite material is homogeneously dispersed in the agitated aqueous foam.

13. The method of claim 1, wherein the skin is a scrim (320) comprising an open cell structure and further comprising applying the scrim (320) comprising the open cell structure to at least one surface of the porous core layer (310, 410, 510, 610, 710, 810, 910, 1010) prior to compressing the heated web.

14. The method of claim 1, wherein the skin is a scrim (320) comprising an open cell structure and further comprising applying the scrim (320) to at least one surface of the porous core layer (310, 410, 510, 610, 710, 810, 910, 1010) after compressing the heated web.

## Patentansprüche

1. Verfahren zum Herstellen eines thermoplastischen Verbundwerkstoff-Artikels, der eine poröse Kernschicht (310, 410, 510, 610, 710, 810, 910, 1010) umfasst, die eine Vielzahl von verstärkenden Glasfasern, ein thermoplastisches Polyolefinmaterial und ein expandierbares Graphitmaterial umfasst, wobei der thermoplastische Verbundwerkstoff-Artikel ferner eine Haut (270, 320, 420, 520, 620, 720, 820, 940) umfasst, die mit einer ersten Oberfläche der porösen Kernschicht (310, 410, 510, 610, 710, 810, 910, 1010) verbunden ist, wobei die poröse Kernschicht die verstärkenden Glasfasern von 30 bis 60 Gewichtsprozent und das expandierbare Graphitmaterial von 5 bis 15 Gewichtsprozent umfasst, wobei der Rest der porösen Kernschicht das thermoplastische Polyolefinmaterial umfasst, wobei das Verfahren Folgendes umfasst:
Kombinieren des thermoplastischen Polyolefinmaterials, der verstärkenden Glasfasern und des expandierbaren Graphitmaterials in einem Gemisch, um einen gerührten wässrigen Schaum zu bilden,
Anordnen des gerührten wässrigen Schaums auf einem Drahtträger,
Entziehen des Wassers, um eine Bahn zu bilden,
Erhitzen der Bahn, welche die verstärkenden Glasfasern, das thermoplastische Polyolefinmaterial und das expandierbare Graphitmaterial umfasst, auf eine erste Temperatur oberhalb eines Schmelzpunkts des thermoplastischen Polyolefinmaterials ohne ein wesentliches Aufgehen des expandierbaren Graphitmaterials und
Zusammenpressen der erhitzten Bahn auf eine erste Dicke von nicht mehr als 4 mm, um eine poröse Kernschicht (310, 410, 510, 610, 710, 810, 910, 1010) bereitzustellen, wobei die poröse Kernschicht (310, 410, 510, 610, 710, 810, 910, 1010) offenzellige Strukturen umfasst, die aus den verstärkenden Glasfasern und dem thermoplastischen Polyolefinmaterial nach dem Zusammenpressen der erhitzten Bahn gebildet werden, und wobei das expandierbare Graphitmaterial in den gebildeten offenzelligen Strukturen der porösen Kernschicht (310, 410, 510, 610, 710, 810, 910, 1010) in einer im Wesentlichen gleichmäßigen Verteilung von der ersten Oberfläche bis zu einer zweiten Oberfläche der porösen Kernschicht (310, 410, 510, 610, 710, 810, 910, 1010) vorhanden ist, und
Koppeln der Haut (270, 320, 420, 520, 620, 720, 820, 940) mit der ersten Oberfläche der porösen Kernschicht (310, 410, 510, 610, 710, 810, 910, 1010) entweder vor dem Zusammenpressen der erhitzten Bahn oder nach dem Zusammenpressen der erhitzten Bahn, um den thermoplastischen Verbundwerkstoff-Artikel bereitzustellen, wobei die Haut (270, 320, 420, 520, 620, 720, 820, 940) einen Gitterstoff oder eine Folie umfasst, wobei der thermoplastische Verbundwerkstoff-Artikel in einem Herstellungszustand des bereitgestellten thermoplastischen Verbundwerkstoff-Artikels einen Schallabsorptionskoeffizienten von mindestens 0,2 bei 2 400 Hz, wie geprüft durch ASTM E1050, datiert 2010, aufweist, wenn die poröse Kernschicht (270, 320, 420, 520, 620, 720, 820, 940) nicht mehr als 4 mm dick ist.

2. Verfahren nach Anspruch 1, das ferner das Verwenden des thermoplastischen Verbundwerkstoff-Artikels als eine Bauplatte ohne Formen des thermoplastischen Verbundwerkstoff-Artikels umfasst.

3. Verfahren nach Anspruch 1, das ferner das Konfigurieren einer Dicke des thermoplastischen Verbundwerkstoff-Artikels so, dass er nicht dicker als 3,5 mm ist, umfasst, während der Schallabsorptionskoeffizient von mindestens 0,2 bei 2 400 Hz, wie geprüft durch ASTM E1050, datiert 2010, bereitgestellt wird.

4. Verfahren nach Anspruch 1, das ferner das Konfigurieren einer Dicke des thermoplastischen Verbundwerkstoff-Artikels so, dass er nicht dicker als 2 mm ist, umfasst, während der Schallabsorptionskoeffizient von mindestens 0,2 bei 2 400 Hz, wie geprüft durch ASTM E1050, datiert 2010, bereitgestellt wird.

5. Verfahren nach Anspruch 1, das ferner das Zusammenpressen der porösen Kernschicht (310, 410, 510, 610, 710, 810, 910, 1010) des thermoplastischen Verbundwerkstoff-Artikels auf eine Dicke, nicht dicker als 3,5 mm, umfasst, und wobei der Verbundwerkstoff-Artikel einen Schallabsorptionskoeffizienten von mindestens 0,5 bei einer Frequenz von 4 500 Hz, wie geprüft durch ASTM E1050, datiert 2010, aufweist, wenn die poröse Kernschicht nicht dicker als 3,5 mm ist.

6. Verfahren nach Anspruch 1, das ferner das Zusammenpressen der porösen Kernschicht (310, 410, 510, 610, 710, 810, 910, 1010) des thermoplastischen Verbundwerkstoff-Artikels auf eine Dicke von weniger als 2 mm umfasst.

7. Verfahren nach Anspruch 1, das ferner das Koppeln einer offenzelligen Folie mit der zweiten Oberfläche der porösen Kernschicht (310, 410, 510, 610, 710, 810, 910, 1010) umfasst.

8. Verfahren nach Anspruch 1, wobei die Haut ein Gitterstoff (320) ist und das ferner das Koppeln eines zusätzlichen Gitterstoffs (430, 840) mit der zweiten Oberfläche der porösen Kernschicht (310, 410, 510, 610, 710, 810, 910, 1010) umfasst, bei dem mindestens einer von dem Gitterstoff (320) und dem zusätzlichen Gitterstoff (430, 840) eine offenzellige Struktur umfasst, und wobei das expandierbare Graphitmaterial eine geschichtete Filmstruktur innerhalb der offenzelligen Strukturen der gebildeten porösen Kernschicht (310, 410, 510, 610, 710, 810, 910, 1010) bildet, um den Schallabsorptionskoeffizienten in dem Herstellungszustand der porösen Kernschicht (310, 410, 510, 610, 710, 810, 910, 1010) von mindestens 0,2 bei 2 400 Hz, wie geprüft durch ASTM E1050, datiert 2010, wenn die poröse Kernschicht (310, 410, 510, 610, 710, 810, 910, 1010) nicht mehr als 4 mm dick ist, und beim Vorhandensein des Gitterstoffs mit offenzelliger Struktur aufrechtzuerhalten.

9. Verfahren nach Anspruch 1, das ferner das Konfigurieren der porösen Kernschicht (310, 410, 510, 610, 710, 810, 910, 1010) mit 35 bis 55 Gewichtsprozent verstärkenden Glasfasern und mindestens 10 Gewichtsprozent expandierbarem Graphitmaterial umfasst, wobei der Rest der porösen Kernschicht das thermoplastische Polyolefinmaterial umfasst.

10. Verfahren nach Anspruch 9, das ferner das Auswählen des expandierbaren Graphitmaterials so umfasst, dass es einen Kohlenstoffgehalt von mindestens 85 Gewichts-% des expandierbaren Graphitmaterials, einen Feuchtigkeitsgehalt von weniger als 1 Gewichts-% des expandierbaren Graphitmaterials umfasst, dass es einen Schwefelgehalt von weniger als 4 Gewichts-% des expandierbaren Graphitmaterials umfasst, dass es ein Expansionsverhältnis von weniger als oder gleich viel wie 270:1 g/cm³ des expandierbaren Graphitmaterials und wahlweise einen nutzbaren pH-Bereich von 5 bis 10 umfasst.

11. Verfahren nach Anspruch 1, bei dem der Schritt des Zusammenpressens das Führen der erhitzten Bahn durch einen Satz von Walzen umfasst, um die poröse Kernschicht mit der Dicke von nicht mehr als 4 mm bereitzustellen.

12. Verfahren nach Anspruch 1, das ferner das Mischen des gerührten wässrigen Schaums umfasst, bis das expandierbare Graphitmaterial homogen in dem gerührten wässrigen Schaum dispergiert ist.

13. Verfahren nach Anspruch 1, wobei die Haut ein Gitterstoff (320) ist, der eine offenzellige Struktur umfasst, und das ferner das Aufbringen des Gitterstoffs (320), der die offenzellige Struktur umfasst, auf mindestens eine Oberfläche der porösen Kernschicht (310, 410, 510, 610, 710, 810, 910, 1010) vor dem Zusammenpressen der erhitzten Bahn umfasst.

14. Verfahren nach Anspruch 1, wobei die Haut ein Gitterstoff (320) ist, der eine offenzellige Struktur umfasst, und das ferner das Aufbringen des Gitterstoffs (320) auf mindestens eine Oberfläche der porösen Kernschicht (310, 410, 510, 610, 710, 810, 910, 1010) nach dem Zusammenpressen der erhitzten Bahn umfasst.

## Revendications

1. Procédé de production d'un article composite thermoplastique, comprenant une couche centrale poreuse (310, 410, 510, 610, 710, 810, 910, 1010) comprenant une pluralité de fibres de verre de renforcement, un matériau de polyoléfine thermoplastique et un matériau de graphite expansible, dans lequel l'article composite thermoplastique comprend en outre une peau (270, 320, 420, 520, 620, 720, 820, 940) couplée à une première surface de la couche centrale poreuse (310, 410, 510, 610, 710, 810, 910, 1010), dans lequel la couche centrale poreuse comprend les fibres de verre de renforcement, de 30 à 60 pourcent en poids, et le matériau de graphite expansible de 5 à 15 pourcent en poids, le reste de la couche centrale poreuse comprenant le matériau de polyoléfine thermoplastique, le procédé comprenant :
la combinaison du matériau de polyoléfine thermoplastique, des fibres de verre de renforcement, et du matériau de graphite expansible dans un mélange pour former une mousse aqueuse agitée ;
la disposition de la mousse aqueuse agitée sur un support de fil ;
l'évacuation de l'eau pour former une bande ;
le chauffage de la bande comprenant les fibres de verre de renforcement, le matériau de polyoléfine thermoplastique et le matériau de graphite expansible à une première température supérieure à un point de fusion du matériau de polyoléfine thermoplastique, sans aucun gonflement substantiel du matériau de graphite expansible ;
la compression de la bande chauffée à une première épaisseur non supérieure à 4 mm pour fournir une couche centrale poreuse (310, 410, 510, 610, 710, 810, 910, 1010), dans lequel la couche centrale poreuse (310, 410, 510, 610, 710, 810, 910, 1010) comprend des structures à cellules ouvertes formées à partir des fibres de verre de renforcement et du matériau de polyoléfine thermoplastique après la compression de la bande chauffée, et dans lequel le matériau de graphite expansible est présent dans les structures à cellules ouvertes formées de la couche centrale poreuse (310, 410, 510, 610, 710, 810, 910, 1010) dans une distribution sensiblement uniforme, de la première surface vers une deuxième surface de la couche centrale poreuse (310, 410, 510, 610, 710, 810, 910, 1010) ; et
le couplage de la peau (270, 320, 420, 520, 620, 720, 820, 940) à la première surface de la couche centrale poreuse (310, 410, 510, 610, 710, 810, 910, 1010), soit avant la compression de la bande chauffée soit après la compression de la bande chauffée, pour fournir l'article composite thermoplastique, dans lequel la peau (270, 320, 420, 520, 620, 720, 820, 940) comprend un canevas ou un film, dans lequel l'article composite thermoplastique fournit un coefficient d'absorption acoustique dans un état tel que produit de l'article composite thermoplastique fourni d'au moins 0,2 à 2 400 Hz, comme testé par la norme ASTM E1050, datée de 2010, lorsque la couche centrale poreuse (270, 320, 420, 520, 620, 720, 820, 940) a une épaisseur non supérieure à 4 mm.

2. Procédé selon la revendication 1, comprenant en outre l'utilisation de l'article composite thermoplastique en tant que panneau de construction sans moulage de l'article composite thermoplastique.

3. Procédé selon la revendication 1, comprenant en outre la configuration d'une épaisseur de l'article composite thermoplastique de sorte qu'elle ne soit pas supérieure à 3,5 mm, tout en fournissant le coefficient d'absorption acoustique d'au moins 0,2 à 2 400 Hz, comme testé par la norme ASTM E1050, datée de 2010.

4. Procédé selon la revendication 1, comprenant en outre la configuration d'une épaisseur de l'article composite thermoplastique de sorte qu'elle ne soit pas supérieure à 2 mm, tout en fournissant le coefficient d'absorption acoustique d'au moins 0,2 à 2 400 Hz, comme testé par la norme ASTM E1050, datée de 2010.

5. Procédé selon la revendication 1, comprenant en outre la compression de la couche centrale poreuse (310, 410, 510, 610, 710, 810, 910, 1010) de l'article composite thermoplastique à une épaisseur non supérieure à 3,5 mm, et dans lequel l'article composite présente un coefficient d'absorption acoustique d'au moins 0,5 à une fréquence de 4 500 Hz, comme testé par la norme ASTM E1050, datée de 2010, lorsque la couche centrale poreuse a une épaisseur non supérieure à 3,5 mm.

6. Procédé selon la revendication 1, comprenant en outre la compression de la couche centrale poreuse (310, 410, 510, 610, 710, 810, 910, 1010) de l'article composite thermoplastique à une épaisseur inférieure à 2 mm.

7. Procédé selon la revendication 1, comprenant en outre le couplage d'un film à cellules ouvertes à la deuxième surface de la couche centrale poreuse (310, 410, 510, 610, 710, 810, 910, 1010).

8. Procédé selon la revendication 1, dans lequel la peau est un canevas (320), et comprenant en outre le couplage d'un canevas additionnel (430, 840) à la deuxième surface de la couche centrale poreuse (310, 410, 510, 610, 710, 810, 910, 1010), dans lequel au moins l'un du canevas (320) et du canevas additionnel (430, 840) comprend une structure à cellules ouvertes, et dans lequel le matériau de graphite expansible forme une structure de feuille stratifiée à l'intérieur des structures à cellules ouvertes de la couche centrale poreuse formée (310, 410, 510, 610, 710, 810, 910, 1010) pour maintenir le coefficient d'absorption acoustique dans l'état tel que produit de la couche centrale poreuse (310, 410, 510, 610, 710, 810, 910, 1010) d'au moins 0,2 à 2 400 Hz, comme testé par la norme ASTM E1050, datée de 2010, lorsque la couche centrale poreuse (310, 410, 510, 610, 710, 810, 910, 1010) a une épaisseur non supérieure à 4 mm et en présence du canevas de structure à cellules ouvertes.

9. Procédé selon la revendication 1, comprenant en outre la configuration de la couche centrale poreuse (310, 410, 510, 610, 710, 810, 910, 1010) avec 35 à 55 pourcent en poids de fibres de verre de renforcement et au moins 10 pourcent en poids du matériau de graphite expansible, le reste de la couche centrale poreuse comprenant le matériau de polyoléfine thermoplastique.

10. Procédé selon la revendication 9, comprenant en outre la sélection du matériau de graphite expansible de sorte qu'il comprenne une teneur en carbone d'au moins 85 % en poids du matériau de graphite expansible, une teneur en humidité inférieure à 1 % en poids du matériau de graphite expansible, qu'il comprenne une teneur en soufre inférieure à 4 % en poids du matériau de graphite expansible, qu'il comprenne un rapport d'expansion inférieur ou égal à 270 :1 g/cm³ du matériau de graphite expansible, et optionnellement un intervalle de pH utile allant de 5 à 10.

11. Procédé selon la revendication 1, dans lequel l'étape de compression comprend le passage de la bande chauffée à travers un ensemble de rouleaux pour fournir la couche centrale poreuse ayant l'épaisseur non supérieure à 4 mm.

12. Procédé selon la revendication 1, comprenant en outre le mélange de la mousse aqueuse agitée jusqu'à la dispersion homogène du matériau de graphite expansible dans la mousse aqueuse agitée.

13. Procédé selon la revendication 1, dans lequel la peau est un canevas (320) comprenant une structure à cellules ouvertes et comprenant en outre l'application du canevas (320) comprenant la structure à cellules ouvertes sur au moins une surface de la couche centrale poreuse (310, 410, 510, 610, 710, 810, 910, 1010) avant la compression de la bande chauffée.

14. Procédé selon la revendication 1, dans lequel la peau est un canevas (320) comprenant une structure à cellules ouvertes et comprenant en outre l'application du canevas (320) sur au moins une surface de la couche centrale poreuse (310, 410, 510, 610, 710, 810, 910, 1010) après la compression de la bande chauffée.
